# EUROPEAN PATENT APPLICATION

(11) **EP 1 337 116 A2**
(43) Date of publication of application: **20.08.2003**
(21) Application number: 03250674.3
(22) Date of filing: 03.02.2003
(51) Int. Cl.: H04N 9/79

(54) **Format converting apparatus, method and program for recording information.**

(30) Priority: 13.02.2002 JP 2002035800
(71) Applicant: Pioneer Corporation, Tokyo-to (JP)
(72) Inventor: Shimizu, Yuji, c/o Pioneer Corporation, Tokorozawa-shi, Saitama-ken (JP); Umehara, Yasuyuki, c/o Pioneer Corporation, Tokorozawa-shi, Saitama-ken (JP)
(74) Representative: Haley, Stephen

(57) **Abstract**

A format converting unit (400) includes a data analysis unit (401) for analyzing the data configuration of each pack, a data obtaining unit (402) for obtaining data in each process, a checking unit (403) for checking data, an RDI data obtaining unit (404) for obtaining predetermined RDI data, a first arithmetic process unit (405) for converting time information, a second arithmetic process unit (406) for performing a PES extension deleting process, a third arithmetic process unit (407) for performing an audio pack converting process, and an arithmetic unit (408) and a second buffer (411) for converting RDI data into a navi-pack. The unit converts the format of the data in the video recording system into one in the video system.

## Description

The present invention relates to the technological fields of an information recording apparatus, an information recording method, and an information recording program, and more specifically to a format converting apparatus for recording information.

Recently, there are increasing tendencies to use optical disks of large storage capacity, and the optical disks (referred to as DVDs (digital versatile disks)) for recording data of a complete movie, etc. in a data compression method have been popularized.

Typical recording systems for use in recording the information about movies, etc. (hereinafter referred to as contents information) on an optical disk of large storage capacity can be a video system compatible with a read-only DVD format, and a video recording system which is not compatible with the read-only DVD format, but enables recorded contents information to be easily edited, and is therefore appropriate for recording data on an optical disk in real time.

The video system is designed to: record data in an authoring system for recording data normally not in real time; generate playback control information (referred to as navigation information in the DVD standards) for control of the playback state of information to be recorded on a separate storage medium on a hard disk, etc. in advance for all contents information with the correspondence to the playback control information taken into account; and record the generated playback control information and the corresponding to the substance of information (contents information) collectively on the optical disk in the disk at once (write-once) system.

Recently, the video system is not limited to the authoring system, but also has become capable of recording the substance of information distributed by a television broadcast in real time. In this case, data can be recorded on an optical disk not in the disk at once system, but in a repeatedly writable incremental write system as DVD-R (DVD-recordable, that is, write-once DVD) and DVD-RW (DVD-re-recordable, that is, repeatedly writable DVD), a restricted overwrite system which is repeatedly writable only for DVD-RW, etc.

On the other hand, the video recording system (also referred to as a VR system) has a file structure standardized such that data can be edited and deleted in any unit. Based on the file structure, a substance of information, etc. distributed by a television broadcast is received and recorded on an optical disk in real time, playback control information, etc. corresponding to the substance of information is generated and recorded on the optical disk in a file separate from the substance of information. Therefore, the video recording system is different from the video system in the file structure allowing the recorded contents information to be easily edited.

On the DVD-R which is a writable DVD-R, a standard using the video system is applied, and what is called an application standard is being applied to the video recording system. Furthermore, a standard using the video recording system in addition to the standard using the video system is also designed for the DVD-RW.

In this situation, in a DVD player in the read-only DVD format in which data can be played back in the video system for general purposes, it is demanded that contents information recorded in the video recording system can be played back.

That is, in the video system in the read-only DVD format, that is, for compatibility with other read-only DVD formats such as a DVD-ROM (read only memory) format, etc., there are file structures not allowing contents information, which is a recorded substance of information, to be easily edited, and the video recording system is superior in convenience in editing contents information, etc. However, the DVD on which data is recorded in the video recording system has the problem that data cannot be played back on the DVD player in the general-purpose read-only DVD format.

Therefore, when the contents information recorded in the video recording system is to be played back on the DVD player in accordance with the read-only DVD format standard, it is necessary to convert the format from the video recording system to the video system.

A method for realizing the above mentioned process can be to decode the contents information recorded in the video recording system to be represented by a base band signal, and then record the information again in the video system by encoding it in the recording format of the video system.

However, in the above mentioned recording format converting method, it is necessary to process the contents information in real time by first playing back the contents information, and there arises the deterioration in audio and video information by repeatedly decoding and encoding the contents information in the compressed data recording method such as the MPEG (moving picture expert group) 2 system, etc.

The present invention has been achieved to solve the above mentioned problems, and aims at providing the recording format converting apparatus capable of converting a recording format at a high speed without deterioration in audio and video information.

The above object of the present invention can be achieved by a format converting apparatus (307) for converting a format of consecutive contents information (VOB) containing at least one of audio information, video information, and data from a first format for recording (VR system) to a second format for generation (video system) with contents of the contents information (VOB) unchanged, provided with; a conversion device (400) for converting the first format (VR system) into the second format (video system) with any coding format (data stream) maintained in the contents information (VOB).

With the above mentioned configuration, according to the present invention, the first format for recording can be converted into the second format for playback without changing the contents of the contents information and with the coding format maintained.

Therefore, it is not necessary to play back and output consecutive contents information in converting the format. That is, it is not necessary to form consecutive video information or audio information. Therefore, the format conversion can be performed at a high speed without data deterioration.

In one aspect of the format converting apparatus (307) of the present invention, the consecutive contents information (VOB) is configured by one or plural pieces of unit information (VOBU) which is a smallest regeneration unit of the contents information (VOB); and said conversion device (400) converts a format for each unit information (VOBU).

With the configuration, according to the present invention, a format can be converted for each unit information, and the compatibility can be easily attained in converting the format of data.

In another aspect of the format converting apparatus (307) of the present invention, said conversion device (400) is provided with: an obtaining device (402) for obtaining contents regeneration starting time information (SCR) indicating at least a regeneration starting time of the contents information (VOB); and a setting device (405) for setting the obtained contents regeneration starting time information (SCR) at a predetermined time set by the second format (video system).

With the configuration, according to the present invention, the contents playback starting time information is set to a predetermined time determined by the second format.

Therefore, since the playback starting time information about contents information can be converted into the information in accordance with the second format, the information can be converted into the format in which the contents information can be appropriately played back in the second format.

In further aspect of the format converting apparatus (307) of the present invention, when regeneration control information (PES extension information) is provided for use in regeneration control of the contents information (VOB) for each unit information (VOBU) in the first format (VR system) while the regeneration control information (PES extension information) is provided for each contents information (VOB) in the second format (video system), said conversion device (400 (406)) converts the regeneration control information (PES extension information) provided in addition to the unit information (VOBU) provided in a position determined in the second format (video system) into invalid data.

With the configuration, according to the present invention, the playback control information distributed in unit information is converted into invalid data while the playback control information distributed in the position determined in the second format is maintained.

Since the playback starting time information about contents information can be converted into the information in accordance with the second format, the information can be converted into the format in which the contents information can be appropriately played back in the second format.

In further aspect of the format converting apparatus (307) of the present invention, said conversion device (400) is provided with: a detecting device (403) for detecting a piece (pack) of data forming part of the unit information (VOBU); and an adding device (407) for adding data piece regeneration starting time information (PTS) to each piece (pack) of the detected data.

With the configuration, according to the present invention, the playback starting time of a piece of data forming part of the unit information can be added for each piece of data.

As a result, when the second format necessarily requires the playback starting time information for each piece of data, each piece of data can be converted into what is in accordance with the second format. Therefore, the information can be converted into the format in which the contents information can be appropriately played back in the second format.

In further aspect of the format converting apparatus (307) of the present invention, when the data piece regeneration starting time information (PTS) indicating a regeneration starting time at which the piece (pack) of data is regenerated is not added, said adding device (407) adds the data piece regeneration starting time information (PTS) to the piece (pack) of data.

With the configuration, according to the present invention, the playback starting time of a piece of data forming part of the unit information can be added for each piece of data.

As a result, when the second format necessarily requires the playback starting time information for each piece of data, each piece of data can be converted into what is in accordance with the second format. Therefore, the information can be converted into the format in which the contents information can be appropriately played back in the second format.

In further aspect of the format converting apparatus (307) of the present invention, said adding device (407) configures the piece (pack) of data for each regeneration unit (frame), and adds the data piece regeneration starting time information (PTS) to each piece (pack) of data.

With the configuration, according to the present invention, the playback starting time of a piece of data forming part of the unit information can be added for each piece of data.

As a result, when the second format necessarily requires the playback starting time information for each piece of data, each piece of data can be converted into what is in accordance with the second format. Therefore, the information can be converted into the format in which the contents information can be appropriately played back in the second format.

In further aspect of the format converting apparatus (307) of the present invention, said conversion device (400 (404, 408, 411)) converts at least regeneration state control information (RDI pack), for control of a regeneration state in each unit information (VOBU), as associated with the second format (video system).

With the configuration, in the present invention, the playback control for playback of each unit information is converted corresponding to the second format.

As a result, when the second format necessarily requires the playback starting time information for each piece of data, each piece of data can be converted into what is in accordance with the second format. Therefore, the information can be converted into the format in which the contents information can be appropriately played back in the second format.

The above object of the present invention can be achieved by an information recording apparatus, provided with: the format converting apparatus (307) as above-mentioned; and a record device (307) for recording the contents information (VOB) in the second format (video system) converted by said format converting apparatus (307) in a storage medium (DVD).

With the configuration, in the present invention, the contents information converted from the first format to the second format is stored on a storage medium.

That is, the contents information stored in the first format can be recorded on the storage medium in the general-purpose second format, and the compatibility for playback of the contents information can be quickly obtained without deterioration, thereby improving the convenience of a user in using the contents information.

The above object of the present invention can be achieved by a format converting method of converting a format of consecutive contents information (VOB) containing at least one of audio information, video information, and data from a first format for recording (VR system) to a second format for generation (video system) with contents of the contents information (VOB) unchanged, provided with: a converting process of converting the first format (VR system) into the second format (video system) with any coding format (data stream) maintained in the contents information (VOB).

With the above mentioned configuration, according to the present invention, the first format for recording can be converted into the second format for playback without changing the contents of the contents information and with the coding format maintained.

Therefore, it is not necessary to play back and output consecutive contents information in converting the format. That is, it is not necessary to form consecutive video information or audio information. Therefore, the format conversion can be performed at a high speed without data deterioration.

In one aspect of the format converting method of the present invention, the consecutive contents information (VOB) is configured by one or plural pieces of unit information (VOBU) which is a smallest regeneration unit of the contents information (VOB); and a format is converted for each unit information (VOBU) in said converting process.

With the configuration, according to the present invention, a format can be converted for each unit information, and the compatibility can be easily attained in converting the format of data.

In another aspect of the format converting method of the present invention, said converting process is provided with: an obtaining process of obtaining contents regeneration starting time information (SCR) indicating at least a regeneration starting time of the contents information (VOB); and a setting process of setting the obtained contents regeneration starting time information (SCR) at a predetermined time set by the second format (video system).

With the configuration, according to the present invention, the contents playback starting time information is set to a predetermined time determined by the second format.

Therefore, since the playback starting time information about contents information can be converted into the information in accordance with the second format, the information can be converted into the format in which the contents information can be appropriately played back in the second format.

In further aspect of the format converting method of the present invention, when regeneration control information (PES extension information) is provided for use in regeneration control of the contents information (VOB) for each unit information (VOBU) in the first format (VR system) while the regeneration control information (PES extension information) is provided for each contents information (VOB) in the second format (video system), the regeneration control information (PES extension information) provided in addition to the unit information (VOBU) provided in a position determined in the second format (video system) is converted into invalid data in said converting process.

With the configuration, according to the present invention, the playback control information distributed in unit information is converted into invalid data while the playback control information distributed in the position determined in the second format is maintained.

Since the playback starting time information about contents information can be converted into the information in accordance with the second format, the information can be converted into the format in which the contents information can be appropriately played back in the second format.

In further aspect of the format converting method of the present invention, said converting process is provided with: a detecting process of detecting a piece (pack) of data forming part of the unit information (VOBU); and an adding process of adding data piece regeneration starting time information (PTS) to each piece (pack) of the detected data.

With the configuration, according to the present invention, the playback starting time of a piece of data forming part of the unit information can be added for each piece of data.

As a result, when the second format necessarily requires the playback starting time information for each piece of data, each piece of data can be converted into what is in accordance with the second format. Therefore, the information can be converted into the format in which the contents information can be appropriately played back in the second format.

In further aspect of the format converting method of the present invention, when the data piece regeneration starting time information (PTS) indicating a regeneration starting time at which the piece (pack) of data is regenerated is not added, the data piece regeneration starting time information is (PTS) added to the piece (pack) of data in said adding process.

With the configuration, according to the present invention, the playback starting time of a piece of data forming part of the unit information can be added for each piece of data.

As a result, when the second format necessarily requires the playback starting time information for each piece of data, each piece of data can be converted into what is in accordance with the second format. Therefore, the information can be converted into the format in which the contents information can be appropriately played back in the second format.

In further aspect of the format converting method of the present invention, the piece (pack) of data is configured for each regeneration unit (frame), and the data piece regeneration starting time information (PTS) is added to each piece (pack) of data in said adding process.

With the configuration, according to the present invention, the playback starting time of a piece of data forming part of the unit information can be added for each piece of data.

As a result, when the second format necessarily requires the playback starting time information for each piece of data, each piece of data can be converted into what is in accordance with the second format. Therefore, the information can be converted into the format in which the contents information can be appropriately played back in the second format.

In further aspect of the format converting method of the present invention, at least regeneration state control information (RDI pack) for control of a regeneration state in each unit information (VOBU) is converted as associated with the second format (video system) in said converting process.

With the configuration, in the present invention, the playback control for playback of each unit information is converted corresponding to the second format.

As a result, when the second format necessarily requires the playback starting time information for each piece of data, each piece of data can be converted into what is in accordance with the second format. Therefore, the information can be converted into the format in which the contents information can be appropriately played back in the second format.

The above object of the present invention can be achieved by an information recording method for converting a format of consecutive contents information (VOB) containing at least one of audio information, video information, and data from a first format for recording (VR system) to a second format for generation (video system) with contents of the contents information (VOB) unchanged, and recording the converted contents information (VOB) in the second format (video system) in a storage medium (DVD), provided with: a converting process of converting the contents information (VOB) in the first format (VR system) into the second format (video system) in the format converting method as above-mentioned; and a recording process of recording the converted contents information (VOB) in the second format (video system) in a storage medium (DVD).

With the configuration, in the present invention, the contents information converted from the first format to the second format is stored on a storage medium.

That is, the contents information stored in the first format can be recorded on the storage medium in the general-purpose second format, and the compatibility for playback of the contents information can be quickly obtained without deterioration, thereby improving the convenience of a user in using the contents information.

The above object of the present invention can be achieved by a format converting program to convert a format of consecutive contents information (VOB) containing at least one of audio information, video information, and data from a first format (VR system) for recording to a second format for generation (video system) with contents of the contents information (VOB) unchanged, making a computer function as a converting device (400) for converting the first format (VR system) into the second format (video system) with any coding format (data stream) maintained in the contents information (VOB).

With the above mentioned configuration, according to the present invention, the first format for recording can be converted into the second format for playback without changing the contents of the contents information and with the coding format maintained.

Therefore, it is not necessary to play back and output consecutive contents information in converting the format. That is, it is not necessary to form consecutive video information or audio information. Therefore, the format conversion can be performed at a high speed without data deterioration.

In one aspect of the format converting program of the present invention, the consecutive contents information (VOB) is configured by one or plural pieces of unit information (VOBU) which is a smallest regeneration unit of the contents information (VOB); and the format converting program makes the computer function as a conversion device (400) for converting a format for each unit information (VOBU).

With the configuration, according to the present invention, a format can be converted for each unit information, and the compatibility can be easily attained in converting the format of data.

In another aspect of the format converting program of the present invention, the format converting program makes the computer function as: an obtaining device (402) for obtaining contents regeneration starting time information (SCR) indicating at least a regeneration starting time of the contents information (VOB); and a setting device (405) for setting the obtained contents regeneration starting time information (SCR) at a predetermined time set by the second format (video system).

With the configuration, according to the present invention, the contents playback starting time information is set to a predetermined time determined by the second format.

Therefore, since the playback starting time information about contents information can be converted into the information in accordance with the second format, the information can be converted into the format in which the contents information can be appropriately played back in the second format.

In further aspect of the format converting program of the present invention, when regeneration control information (PES extension information) is provided for use in regeneration control of the contents information (VOB) for each unit information (VOBU) in the first format (VR system) while the regeneration control information (PES extension information) is provided for each contents information (VOB) in the second format (video system), the format converting program makes the computer function as a conversion device (400 (406)) for converting the regeneration control information (PES extension information) provided in addition to the unit information (VOBU) provided in a position determined in the second format (video system) into invalid data.

With the configuration, according to the present invention, the playback control information distributed in unit information is converted into invalid data while the playback control information distributed in the position determined in the second format is maintained.

Since the playback starting time information about contents information can be converted into the information in accordance with the second format, the information can be converted into the format in which the contents information can be appropriately played back in the second format.

In further aspect of the format converting program of the present invention, the format converting program makes the computer function as: a detecting device (403) for detecting a piece (pack) of data forming part of the unit information (VOBU); and an adding device (407) for adding data piece regeneration starting time information (PTS) to each piece (pack) of the detected data.

With the configuration, according to the present invention, the playback starting time of a piece of data forming part of the unit information can be added for each piece of data.

As a result, when the second format necessarily requires the playback starting time information for each piece of data, each piece of data can be converted into what is in accordance with the second format. Therefore, the information can be converted into the format in which the contents information can be appropriately played back in the second format.

In further aspect of the format converting program of the present invention, when the data piece regeneration starting time information (PTS) indicating a regeneration starting time at which the piece (pack) of data is regenerated is not added, the format converting program makes the computer function as an adding device (407) for adding the data piece regeneration starting time information (PTS) to the piece (pack) of data.

With the configuration, according to the present invention, the playback starting time of a piece of data forming part of the unit information can be added for each piece of data.

As a result, when the second format necessarily requires the playback starting time information for each piece of data, each piece of data can be converted into what is in accordance with the second format. Therefore, the information can be converted into the format in which the contents information can be appropriately played back in the second format.

In further aspect of the format converting program of the present invention, the format converting program makes the computer function as an adding device (407) for configuring the piece (pack) of data for each regeneration unit (frame), and adding the data piece regeneration starting time information (PTS) to each piece (pack) of data.

With the configuration, according to the present invention, the playback starting time of a piece of data forming part of the unit information can be added for each piece of data.

As a result, when the second format necessarily requires the playback starting time information for each piece of data, each piece of data can be converted into what is in accordance with the second format. Therefore, the information can be converted into the format in which the contents information can be appropriately played back in the second format.

In further aspect of the format converting program of the present invention, the format converting program makes the computer function as a conversion device (400 (404, 408, 411)) for converting at least regeneration state control information (RDI pack) for control of a regeneration state in each unit information (VOBU) as associated with the second format (video system).

With the configuration, in the present invention, the playback control for playback of each unit information is converted corresponding to the second format.

As a result, when the second format necessarily requires the playback starting time information for each piece of data, each piece of data can be converted into what is in accordance with the second format. Therefore, the information can be converted into the format in which the contents information can be appropriately played back in the second format.

The above object of the present invention can be achieved by the computer-readable storage medium (DVD) on which the format converting program as above-mentioned is stored so as to be readable through a computer.

With the above mentioned configuration, according to the present invention, the first format for recording can be converted into the second format for playback without changing the contents of the contents information and with the coding format maintained.

Therefore, it is not necessary to play back and output consecutive contents information in converting the format. That is, it is not necessary to form consecutive video information or audio information. Therefore, the format conversion can be performed at a high speed without data deterioration.

With the configuration, according to the present invention, a format can be converted for each unit information, and the compatibility can be easily attained in converting the format of data.

With the configuration, according to the present invention, the contents playback starting time information is set to a predetermined time determined by the second format.

Therefore, since the playback starting time information about contents information can be converted into the information in accordance with the second format, the information can be converted into the format in which the contents information can be appropriately played back in the second format.

With the configuration, according to the present invention, the playback control information distributed in unit information is converted into invalid data while the playback control information distributed in the position determined in the second format is maintained.

Since the playback starting time information about contents information can be converted into the information in accordance with the second format, the information can be converted into the format in which the contents information can be appropriately played back in the second format.

With the configuration, according to the present invention, the playback starting time of a piece of data forming part of the unit information can be added for each piece of data.

As a result, when the second format necessarily requires the playback starting time information for each piece of data, each piece of data can be converted into what is in accordance with the second format. Therefore, the information can be converted into the format in which the contents information can be appropriately played back in the second format.

With the configuration, according to the present invention, the playback starting time of a piece of data forming part of the unit information can be added for each piece of data.

As a result, when the second format necessarily requires the playback starting time information for each piece of data, each piece of data can be converted into what is in accordance with the second format. Therefore, the information can be converted into the format in which the contents information can be appropriately played back in the second format.

With the configuration, according to the present invention, the playback starting time of a piece of data forming part of the unit information can be added for each piece of data.

As a result, when the second format necessarily requires the playback starting time information for each piece of data, each piece of data can be converted into what is in accordance with the second format. Therefore, the information can be converted into the format in which the contents information can be appropriately played back in the second format.

With the configuration, in the present invention, the playback control for playback of each unit information is converted corresponding to the second format.

As a result, when the second format necessarily requires the playback starting time information for each piece of data, each piece of data can be converted into what is in accordance with the second format. Therefore, the information can be converted into the format in which the contents information can be appropriately played back in the second format.

The above object of the present invention can be achieved by an information recording program to convert a format of consecutive contents information (VOB) containing at least one of audio information, video information, and data from a first format for recording (VR system) to a second format for generation (video system) with contents of the contents information (VOB) unchanged, and record the converted contents information (VOB) in the second format (video system) in a storage medium (DVD), wherein the format converting program makes the computer function as: a conversion device (400) for converting the contents information (VOB) in the first format (VR system) into the second format (video system) by the format converting program as above-mentioned; and a record device (307) for recording the contents information (VOB) converted into the second format (video system).

The above object of the present invention can be achieved by the computer-readable storage medium (DVD) on which the information recording program as above-mentioned is stored so as to be readable through a computer.

With the configuration, in the present invention, the contents information converted from the first format to the second format is stored on a storage medium.

That is, the contents information stored in the first format can be recorded on the storage medium in the general-purpose second format, and the compatibility for playback of the contents information can be quickly obtained without deterioration, thereby improving the convenience of a user in using the contents information.
FIG. 1 shows the physical recording format (I) in a DVD video standard (video system);
FIG. 2 shows the configuration of the GOP in the DVD video standard (video system);
FIG. 3 shows the physical recording format (II) in the DVD video standard (video system);
FIG. 4 shows the physical format in the DVD video standard (video system);
FIG. 5 shows the physical format (I) in the DVD recording standard (video recording system);
FIG. 6 shows the physical format (II) in the DVD recording standard (video recording system);
FIG. 7 shows the physical format (III) in the DVD recording standard (video recording system);
FIG. 8 shows the physical format in the DVD recording standard (video recording system);
FIGs. 9A and 9B show the configuration of a packet in the DVD video standard (video system) and the DVD recording standard (video recording system);
FIG. 10 shows the configuration of the basic configuration of the information record and playback apparatus according to the present invention;
FIG. 11 shows the configuration of the format converting unit in the interface of the information record and playback apparatus according to the present invention;
FIGs. 12A and 12B are a view of the principle showing the time information converting process (offset process) according to the present embodiment;
FIG. 13 is a flowchart of the operation of the time information converting process according to the present embodiment;
FIG. 14 is a flowchart of the operation of the PES extension deleting process according to the present embodiment;
FIGs. 15A and 15B are a view of the principle showing the audio pack converting process according to the present embodiment;
FIG. 16 is a flowchart of the operation of the audio pack converting process according to the present embodiment;
FIG. 17 shows the converting process performed when the value of the RDI pack 160 according to the present embodiment is converted into the navi-pack 41;
FIG. 18 is a flowchart of the operation of the playback control information converting process according to the present embodiment; and
FIG. 19 is a flowchart of the operation of the conversion recording process according to the present embodiment.

The preferred embodiments of the present invention are described below by referring to the attached drawings.

The embodiments described of the present invention below are applied to be in accordance with the DVD video standard which is a recording format standard of the information about a movie, etc., and applied to an information record and playback apparatus for recording/replaying the images, etc. on the DVD-R/R as a writable storage medium.

### (I) DVD video standard

Before explaining the practical embodiments of the present invention, the outline of the DVD video standard of the video system and the video recording system as a recording system (hereinafter referred to as a recording format) of an information recording apparatus is described first.

### [Video system]

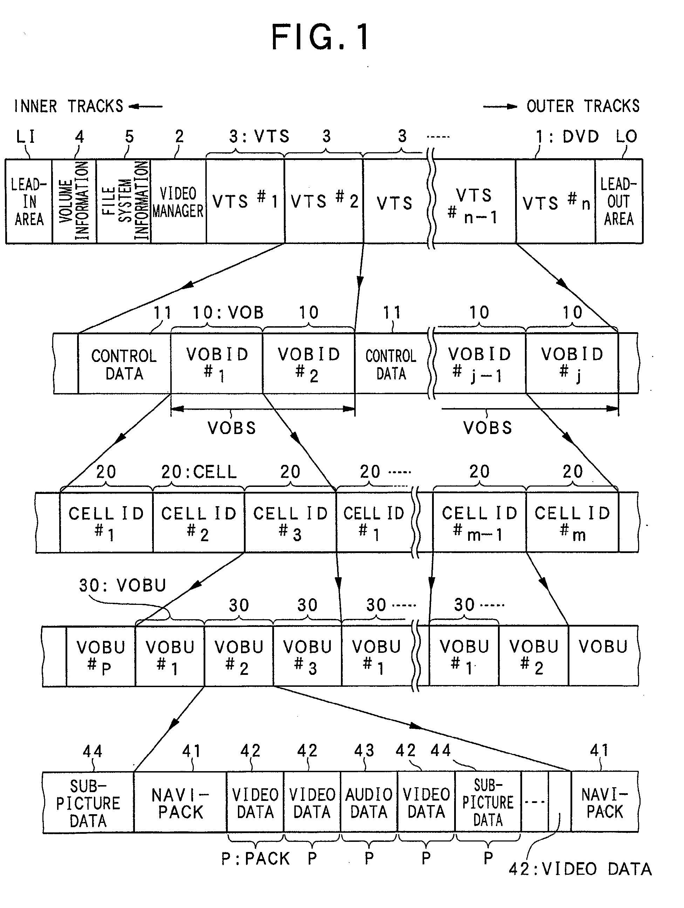

First, the DVD video standard of the video system is described below by referring to FIGs. 1 to 4.

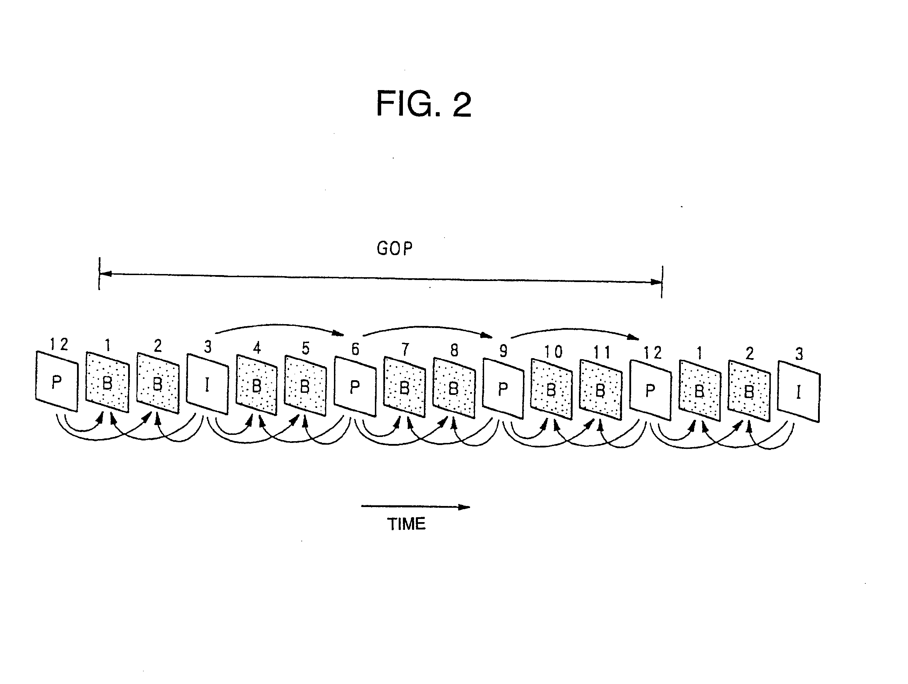

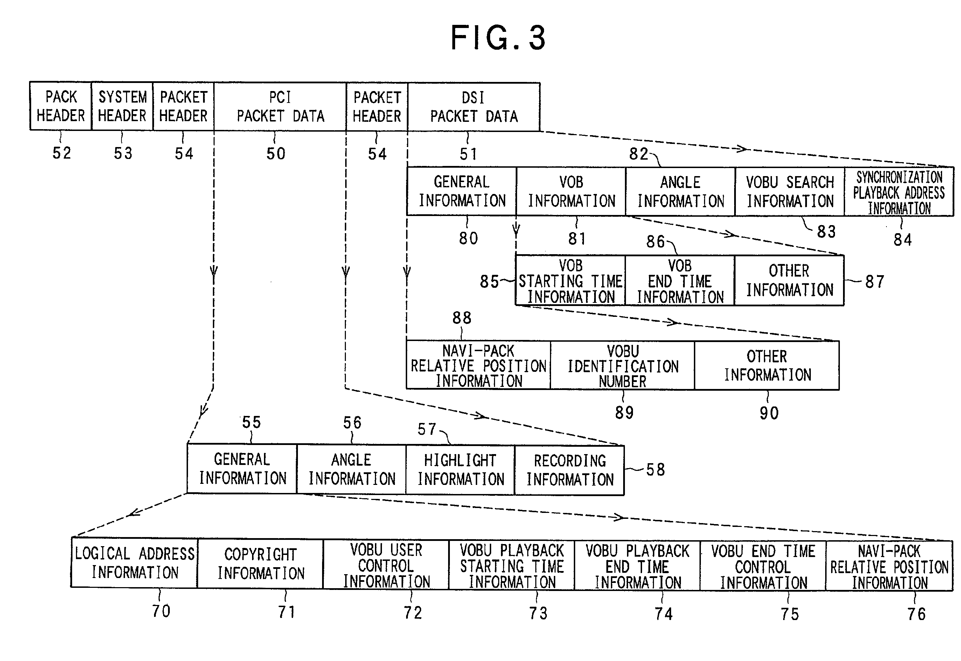

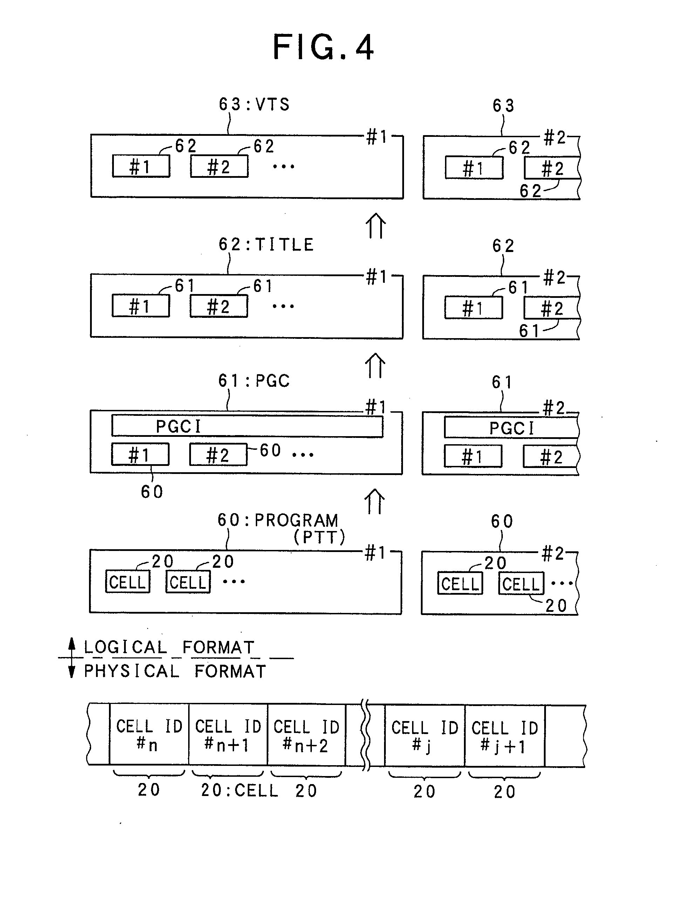

FIGs. 1 and 3 show the physical recording formats in the video system. FIG. 2 shows the configuration of the GOP(Group of Picture) in the DVD video standard. FIG. 4 shows a logical format in the video system.

As shown in FIG. 1, a writable DVD 1 on which recording information is recorded in accordance with the DVD video standard such as the DVD (practically, a write-once DVD-R (DVD-recordable), or the repeatedly writable DVD-RW (DVD-rerecordable), etc., has a read-in area LI on the innermost track and a lead-out area LO on the outermost track. Between the areas, video information and audio information are divided into a plurality of VTS (video title set) 3 (VTS #1 to VTS#n) having the respective ID (identification) numbers and stored.

The VTS 3 is a set (group) of related (having the same attributes such as the numbers of contained audio information and sub-picture information (sub-picture information about subtitle, etc. of movies) of specifications, corresponding languages, etc.) titles (works such as movies presented by producers to the audience). For example, the VTS 3 stores a movie as a plurality of different movies having the respective titles in different languages, and as the titles of the same movie having different titles as a theater version, a special version, etc.

Immediately before the area in which the VTS 3 is recorded, a video manager 2 is recorded. The information recorded as the video manager 2 can be VMGI (video manager information). For example, the VMGI information contains all video information and audio information recorded in the DVD 1 such as the menu which shows each title of the contents, the information for preventing illegal copy, an access table for access of each title and relevant information backup information, etc.

Between the video manager 2 and the read-in area LI, volume information 4 for identification of the entire information recorded in the DVD 1 and file system information 5 indicating the file structure of the data in the video manager 2 and each VTS 3 are recorded.

Each VTS 3 is configured by a leading control data 11, and a plurality of objects 10 which are contents information each piece of which is assigned an ID number (referred to as video objects (hereinafter referred to as VOBs) because they are video information in the present embodiment). The objects 10 correspond to the contents information according to the present invention.

The portion configured by a plurality of VOB 10 is referred to as a VOB set (referred to as VOBS). The VOB set identifies the substance portion for discrimination between the control data 11 which is other data forming part of the VTS 3 and the plurality of VOBs 10 which are substance portions of the video information and the audio information.

In the control data 11 recorded as a header of each VTS 3, the information such as the PGCI (Program Chain Information), etc. which are various information relating to a program chain that is a logical portion obtained by combining a plurality of cells described lager, and the VTSI (video title set information) which is the backup information are recorded.

In each VOB 10, the substance portion (video or audio other than the control information) of video information and audio information is to be recorded in addition to control information, and the contents information is divided and stored in the plurality of VOBs 10.

Each VOB 10 is configured by a plurality of cells 20 each having an ID number, and is completed by the plurality of cells 20.

Each of the cells 20 does not belong to two adjacent VOBs 10. Furthermore, each cell 20 is configured by a plurality of VOB units (VOBU) 30 (corresponding to the unit information according to the present invention) each having an ID number.

The VOB unit 30 indicates unit information containing video information, audio information, and sub-picture information. Each VOB unit 30 is configured by a pack (hereinafter referred to simply as a navi-pack (corresponding to the playback state control information according to the present invention)) 41 indicating navigation information storing control information including data, etc. as control target included in each VOB unit 30, video data 42 as video information, audio data 43 as audio information, and sub-picture data 44 as sub-picture information. Only video data is recorded as the video data 42, and only audio data is recorded as the audio data 43. As the sub-picture data 44, only graphic data such as characters as sub-pictures and graphics, etc. is recorded.

Each VOB unit 30 is recorded with the playback time (corresponding to the data recorded between the navi-pack 41 of 1 and the navi-pack 41 adjacent to the navi-pack 41 of 1) set equal to or longer than 0.4 second and equal to or shorter than 1 second. Therefore, the navi-pack 41 is necessarily detected once in 0.4 to 1 second during the playback.

Furthermore, in each VOB unit 30, the navi-pack 41 is always arranged as the header followed by the video data 42, the audio data 43, and the sub-picture data 44. However, it is not necessary to include the video data 42, the audio data 43, and the sub-picture data 44 in the VOB unit 30. Although they are included in the VOB unit 30, the number or order of them can be arbitrarily set.

According to the standards, there are eight variations of audio writable on the DVD 1, and there are 32 variations of writable sub-pictures.

Each section of these video data 42, audio data 43, and sub-picture data 44 is generally referred to as a pack, and each VOB unit 30 has the video data 42, the audio data 43, and the sub-picture data 44 recorded as divided into packs.

All video data 42 contained in each VOB unit 30 is configured by one or more GOPs (group of picture). The GOP is the smallest playback unit prescribed in the standard of the MPEG 2 system which is an image compression system adopted when the video information is recorded on the DVD 1 according to the present embodiment, and the playback display time information referred to as a PTS (presentation time stamp) indicating the playback time on the playback time axis on which the video data 42 contained in the GOP is recorded at the head of each GOP. The MPEG 2 system is described later.

The pack in which the video data 42 is recorded is referred to as a video pack, the pack in which the audio data 43 is recorded is referred to as an audio pack, and the pack in which the sub-picture data 44 is recorded is referred to as a sub-picture pack.

In the pack header recorded at the head of each pack, the time information (corresponding to the playback starting time information according to the present invention) referred to as an SCR (system clock reference) is recorded. The SCR indicates a read starting time on the playback time axis at which reading the data contained in each pack from a track buffer in the information playback apparatus for playing back the information recorded on the DVD 1, and inputting the read information into each buffer are to be started.

In each of the above mentioned packs, the video data 42, the audio data 43, or the sub-picture data 44 is to be recorded in each packet which is a record unit obtained by further sectioning each pack. However, in the DVD 1 according to the present embodiment, normally a pack is configured by one packet.

The navi-pack 41 comprises DSI data which is retrieval information (for example, an address on the DVD 1 on which the video, audio, etc. to be played back is recorded) for retrieval of video, audio, etc. to be played back, and PCI data which relates to the playback control when the video or audio is displayed when it is retrieved based on the DSI data.

The PCI data contains highlight information for definition of the display and operation when a selection item to be selected by an audience is selected. According to the highlight information, for example, a change on the screen display for a selected item on the image (what is called a menu screen) displaying items to be selected by an audience, a command (instruction of an operation to be performed for the selected item) for a display position to be changed for the selection and a selected item, etc. is set. The video information for display of a frame, selection button, etc. required to configure and display the menu screen is recorded as the sub-picture data 44 which is the above mentioned sub-picture information. The details of the DSI data and the PCI data are described later.

Described below will be the outline of the MPEG 2 system for compressing video data adopted in the present embodiment.

Normally, in consecutive frame images, the frame images before and after a frame image are similar with each other and have correlation to each other in many cases. Therefore, in the MPEG 2 system, based on a plurality of frame images transferred at intervals of several frames, another frame image existing among the plurality of frame images is generated by an interpolating arithmetic based on a vector, etc. of an original image.

When the other frame image is recorded, only by recording the information about the difference and a movement vector among the plurality of frame images, the other frame image can be played back by predicting it from the above mentioned plural frame images by referring to the information during playback. Thus, a compressed image can be recorded.

The GOP is described below by referring to FIG. 2.

FIG. 2 shows an example of a plurality of frame images configuring each GOP.

FIG. 2 shows the case in which each GOP is configured by twelve frame images (in the MPEG 2 system, the number of frame images contained in each GOP is not fixed). The frame image indicated by the code 'I' is referred to as an I picture (intra-coded picture), and can play back a complete frame image by itself.

The frame image indicated by the code 'P' is referred to as a P picture (predictive-coded picture), and is a predicted image generated by decoding the difference between predicted images compensated for and played back based on the already decoded I picture or other P picture.

Furthermore, the frame image indicated by the code 'B' is referred to as a B picture (bidirectionally predictive-coded picture). When a predicted image is played back, not only the already decoded I picture or P picture, but also the I picture or P picture in the future in time is used in the prediction.

In FIG. 2, the prediction relation 'interpolation relation' between pictures is indicated by an arrow.

In the common MPEG 2 system used in the DVD 1 according to the present embodiment, a variable rate system in which the amount of data contained in each GOP is not constant is adopted. That is, each picture contained in one GOP corresponds to a quickly moving picture. When the correlation between the pictures is small, the amount of data configuring each picture increases, and therefore the amount of data contained in one GOP increases.

On the other hand, each picture contained in each GOP corresponds to a picture indicating a smaller movement. When the correlation between the pictures is large, the amount of data configuring each picture is small, and the amount of data contained in each GOP becomes smaller.

The physical data structures of the PCI data and the DSI data are described below by referring to FIG. 3.

The PCI data and the DSI data contained in the navi-pack 41 are configured by: PCI packet data 50 having actual data of PCI data and DSI packet data 51 having actual data of DSI data; a pack header 52 having information such as a physical address (Pack Start Code) recording the pack, SCR, etc.; a system header 53 having a physical address (System Header Start Code) recording the system header of the pack and the attribute information about a data stream; and each packet header 54.

The PCI packet data 50 is configured as shown in FIG. 3: general information 55 as a body of PCI data 45; angle information 56 recording information for multi-angle; highlight information 57 recording menu display information displayed for selection of a multi-angle display; and recording information 58 as an ISRC (International Standard Recording Code) in accordance with the ISO (International Standardization Organization) 3901.

The ISRC refers to the information such as a nation code in the sub-code used in a CD (compact disc), etc., a contents holder code, etc.

The general information 55 is configured by:
logical address information 70 indicating the number of a logical block predetermined from the head of the VOB 10 of the navi-pack 41; copyright information 71 indicating the information about copy protection, that is, the copyright information; user control information 72 indicating the operation control of the user in the VOB unit 30; VOBU playback starting time information 73 indicating a playback starting time on the playback time axis of the VOB unit 30 containing the navi-pack 41; VOBU playback end time information 74 indicating the playback end time on the playback time axis of the VOB unit 30; VOBU end time restriction information 75 indicating the playback restriction end time on the playback time axis different from the VOBU playback end time information in the VOB unit 30; and navi-pack relative position information 76 which is relative record address information from the first video frame of a cell to the first frame of the VOB unit 30.

The DSI packet data 51 is configured by: general information 80 as a body of DSI data 46; VOB information 81 which is the information about the VOB 10 to which the navi-pack 41 belongs; angle information 82 recording the information for multi-angle; VOBU search information 83 indicating the recording position on the DVD 1 of other VOB units 30 to be played back before and after the VOB unit 30 to which the navi-pack 41 belongs; and synchronization playback address information 84 indicating the address information for synchronous playback between video data and audio data.

The general information 80 is configured by navi-pack relative position information 88 similar to the navi-pack relative position information 76; and a VOBU identification number 89 for identification of the VOB unit 30 to which the navi-pack 41 belongs; and other information 90 which is other information.

The VOB information 81 is configured by: VOB starting time information 85 indicating the playback starting time on the playback time axis of the VOB 10 to which the VOB unit 30 containing the navi-pack 41 belongs; VOB end time information 86 indicating the playback end time on the playback time axis of the VOB 10; and other information 90 which is other information.

The VOBU search information 83 includes: the position information about the recording positions on the DVDs 1 after and before the VOB unit 30 to which the navi-pack 41 belongs; and the position information about the recording position on the DVD 1 of another VOB unit 30 to be played back in the range 120 seconds before and after the starting time of the VOB unit 30.

In the recording format of the hierarchical structure shown in FIG. 1, each section is used by the producer in arbitrarily setting and recording data depending on the purpose. By playing back the data based on the logical structure described below for each section, various types of playback can be performed.

The logical format (logical structure) which is a combination of information recorded by physical sections shown in FIG. 1 or FIG 3 is described below by referring to FIG. 4. The logical structure shown in FIG. 4 is not the actual structure in which the information is recorded on the DVD 1, but the information (access information or time information, etc.) for playback of a combination of various data (especially the plural cells 20) shown in FIG. 1 in the logical structure shown in FIG. 4 is recorded on the DVD 1, especially in the control data 11.

In explaining the structure from the lower hierarchical level shown in FIG. 4 for clear explanation, when a plurality of cells 20 are selected from the physical structure described above by referring to FIG. 1, and are combined, a program 60 is logically configured based on the intention of a producer. The program 60 is the smallest logical unit accessed by a command after the system controller in the information playback apparatus identifies a section.

The producer can define one or a plurality of programs 60 as the smallest unit which can be freely selected by an audience. The unit is referred to as a PTT (part of title).

Since one program 60 can be logically configured by selecting a plurality of cells 20, the producer can also use one cell 20 among a plurality of programs 60, that is, can play back one cell 20 among a plurality of different programs 60, that is, can share the cells 20.

As for the number of each cell 20, the cell 20 is processed using a cell ID number when it is processed in the physical format shown in FIG. 1 (cell ID# in FIG. 1). When it is processed in the logical format shown in FIG. 4, it is processed using a cell number in the description order in the PGCI described later.

In the video system, a PGC (program chain) 61 is logically configured based on the intention of a producer by combining a plurality of programs 60. In the unit of the PGC 61, the above mentioned PGCI is defined, and the PGCI includes a playback order (in the playback order, a program number unique is assigned to each program 60) of the cells 20 for each program 60 when each program 60 is played back, the address indicating the recording position on the DVD 1 of each cell 20, the number of the leading cell 20 to be played back in one program 60, a playback system (when information is recorded on the DVD 1 according to the present embodiment, the producer can select and play back for each PGC 61 any playback method of the normal playback, the random playback (random playback by a random number, and the same program 60 can be played back plural number of times), and the shuffle playback (the random playback similar to the above mentioned random playback by a random number, but the same program 60 can be played back only once, that is, the same program 60 cannot be played back plural number of times)) of each program 60, and each command (a command which can be specified by a producer for each PGC 61 or cell 20).

The recording position on the DVD 1 of the PGCI is in the control data 11 (refer to FIG. 1) as described above. However, when the PGCI relates to the menu in the video manager 2, the recording position of the PGCI is in the control data (not shown in the attached drawings) contained in the video manager 2.

In each PGC 61, practical data of video, audio, etc. is contained as a combination of programs 60 (that is, as a combination of cells 20) in addition to the above mentioned PGCI.

In each PGC 61, the cells 20 described in the explanation of the program 60 can be used (that is, the same cell 20 can be used by different PGCs 61), and the cell 20 to be used can be selected by the producer from between the method (playing back continuously arranged cells) of sequentially playing back the cells 20 stored on the DVD 1 and the method (playing back discontinuously arranged cells) of playing back cells regardless of the record order on the DVD 1 (for example, first playing back the cell 20 recorded later, etc.).

In the video system, one or more PGCs 61 logically configure a title 62, and the title 62 is, for example, a unit corresponding to one movie, and is the complete information that the producer is to provide for the audience.

Therefore, one or more titles 62 logically configure a VTS 63, and the titles 62 contained in the VTS 63 have common attributes, and, for example, a movie in different languages correspond to the respective titles 62 for the same movie.

Furthermore, the information corresponding to one VTS 63 shown in FIG. 4 corresponds to the information contained in one VTS 3 shown in FIG. 1. That is, all information logically contained in the VTS 63 shown in FIG. 4 is recorded as one VTS 3 on the DVD 1.

By the producer specifying the information sectioned in the physical structure based on the above mentioned logical format, a title (of a movie, etc.) to be viewed by an audience is formed.

### [Video recording system (VR system)]

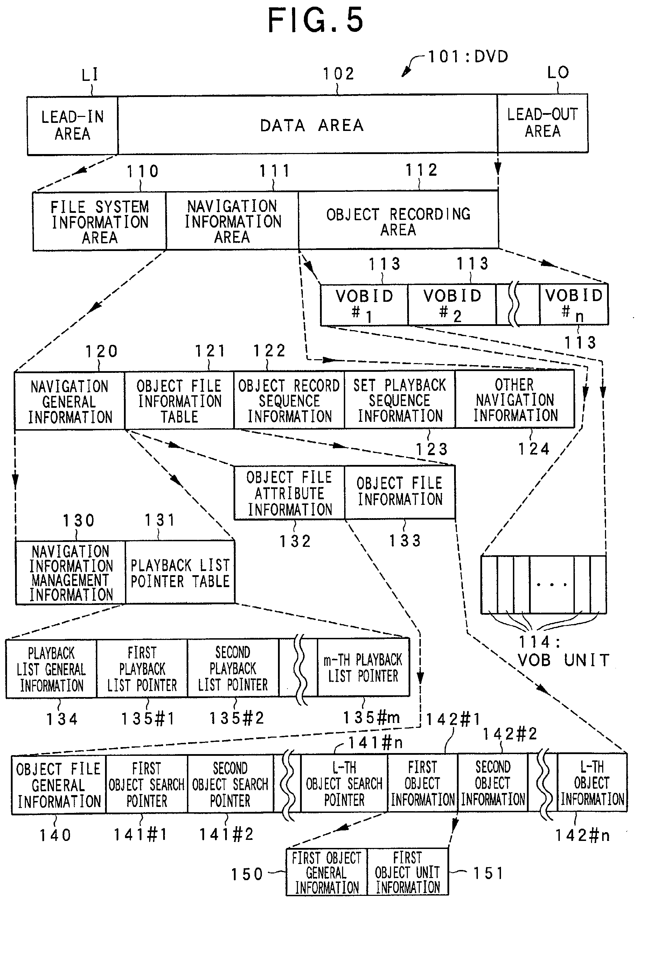

The recording format in the video recording system which is the precondition of the present embodiment is described below by referring to FIGs. 5 to 8.

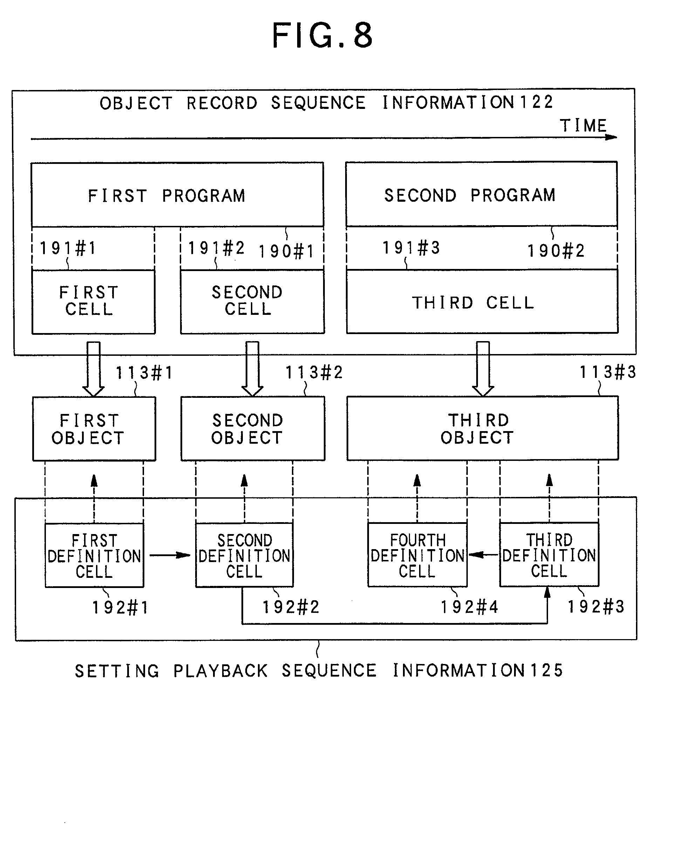

FIGs. 5 to 7 show the physical recording format on the DVD after the video information (contents information) has been recorded in accordance with each recording standard (practically, the physical format indicating the recording position, etc. of each contents information on the DVD). FIG. 8 shows a logical recording format generated to control the playback state of the contents information recorded on the DVD (practically, the recording position of each contents information on the DVD to be connected in each information connection method and the corresponding connection method when the data is played back).

The DVD 101 in accordance with the recording standard includes from inner tracks to outer tracks as shown in FIG. 5 a lead-in area LI in which the starting information, etc. which is the control information for start of the playback of the contents information on the DVD is recorded, the data area 102 in which the playback control information (practically, the playback control information indicating the playback order and the playback time of each information configuring the contents information, the recording position on the DVD 101, etc.) for control of the contents information to be actually played back and the playback state of the contents information is recorded, and the lead-out area LO in which the stop information which is the control information for stopping the playback of the contents information, etc. is recorded.

The data area 102 comprises a file system information area 110, a navigation information area 111, and an object recording area 112. In the object recording area 112, a plurality of objects (a video object (VOB) according to the present embodiment because the contents information may be video information) 113 (corresponding to the contents information of the present invention) which are contents information to be recorded are recorded.

In each VOB 113, a series of contents information recorded after the recording process starts until it terminates is recorded, and each time continuous contents information terminates, each VOB 113 is formed in the object recording area 112.

FIG. 5 shows the state of recording n VOBs 113 as the VOBII)#1 to VOBID#n with each number (ID) added.

In the logical format described later, a series of VOBs 113 recorded on the DVD 101 recorded after the recording process starts until it terminates are referred to as a program, and each VOB 113 is configured by a plurality of VOB units 114 (corresponding to the unit information according to the present invention).

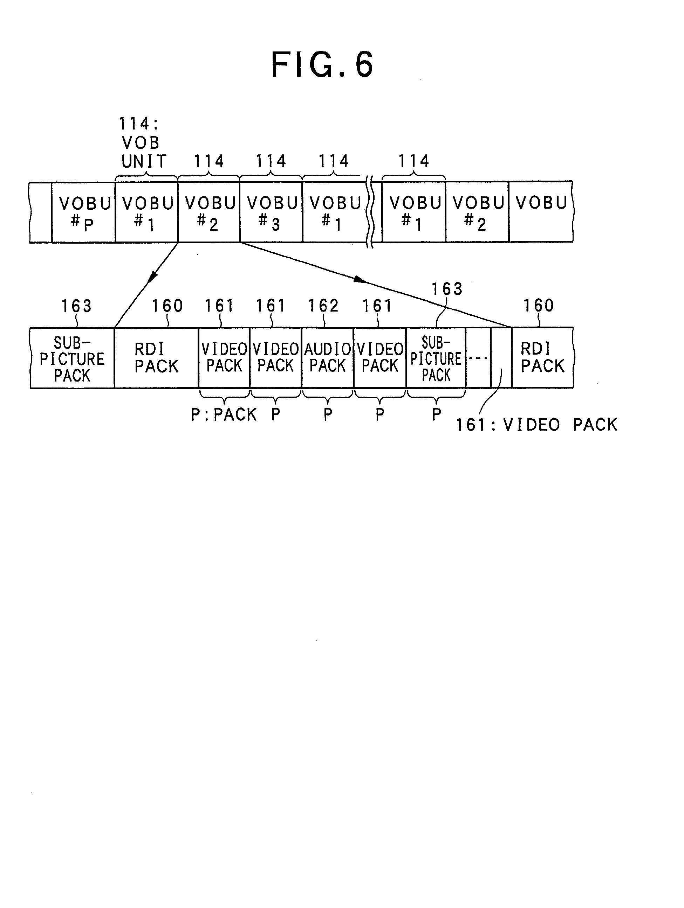

The VOB unit 114 is recorded as the smallest unit of edition or deletion when contents information is recorded, and has the same configuration as the data configuration in the above mentioned video system except that it has an RDI (real-time data information) pack 160 (corresponding to the playback state control information according to the present invention) instead of the navi-pack 41 as shown in FIG. 6.

Practically, each VOB unit 114 has the RDI pack 160 as a header followed by, as in the video system, video data (video pack) 161, audio data (audio pack) 162, and sub-picture data (sub-picture pack) 163. However, each of the video pack 161, the audio pack 162, and the sub-picture pack 163 is not necessarily in the VOB unit 114, and although it is in the VOB unit 114, the number of packs and the order can be arbitrarily set. The details of the RDI pack are described later.

On the other hand, the navigation information is recorded in the navigation information area 111, and the system information for storage of the navigation information in the navigation information area 111 in the file format in the hierarchical structure is recorded in the file system information area 110.

The navigation information is the playback control information for control of the playback state of the contents information recorded in the object recording area 112 as described later, and is configured by navigation general information 120, an object file information table 121, object record sequence information 122, set playback sequence information 123, and navigation information 124.

The navigation general information 120 is configured by: navigation information management information (that is GI (general information) 130 for management of each sequence information in the navigation information area 111 or the storage position (recording position) in the navigation information area 111 of the information table, the record starting position of the object recording area 112, etc.; and a playback list pointer table 131 indicating the correspondence between the navigation information stored in the set playback sequence information 123 and the playback list (referred to as a play list (PL) according to each recording standard) described later.

The object file information table 121 is configured by: object file attribute information 132 which indicates the type of the VOB 113 recorded in the object recording area 112 and the attribute information relating to the type, etc.; and object file information 133 which indicates the playback starting time and the playback end time of each VOB 113, that is, the playback starting time and the playback end time of each VOB 113 using the head of the VOB 113 as the starting point, the relevant information, etc.

The object file information 133 is configured by: object file general information 140 in which various information about one or more VOBs 113 recorded on the DVD 101 is recorded, and, practically, which includes the total number of the VOBs 113 on the DVD 101; one object search pointer 141 (the number of VOBs 113 currently recorded on the DVD 101) describing the leading address information of each VOB 113 to be retrieved (played back) in the playback process described later, etc.; and one piece of object information 142 (equal to the number of the object search pointers 141) describing the address information, etc. indicating the recording position on the leading DVD 101 of each VOB 113.

Each piece of object information 142 is configured by: object general information 150 which is the information relating to the playback starting time and the playback end time of each VOB 113 and the relevant information: and object unit information 151 which is the information about the playback time, the record starting address, or the size, etc. of the VOB unit 114 forming each VOB 113.

The object record sequence information 122 is referred to in each recording standard as an original program chain (ORG-PGC), and collectively indicates the record sequence of each VOB 113, that is, what kind of contents information and in which order is recorded as the corresponding VOB 113 on the DVD 101 when the recording process is started.

The above mentioned object file information table 121 and object record sequence information 122 are recorded as newly generated and updated each time a new VOB 113 is recorded on the DVD 101. According to the information, the user can play back the VOB 113 in the same order and playback time as each VOB 113 was recorded.

On the other hand, the set playback sequence information 123 is referred to as a user defined program chain (UD-PGC) according to each recording standard. It is playback procedure information to be recorded by a user for logically playing back all or a part of the recorded VOBs 113 by a unique combination after each VOB 113 is recorded, and playback procedure information to be recorded with a number assigned each time the user newly performs a setting process. Therefore, one user defined program chain is associated with one playback list described above.

Other navigation information 124 is configured by necessary information for playback control other than each piece of the above mentioned navigation information.

As the playback list pointer table 131, the pointer information indicating the correspondence between the numbers of one or more pieces of the set playback sequence information 123 presently recorded on DVD 101 and the numbers of the playback lists set by the user is recorded. Practically, the playback list pointer table 131 is configured by: playback list general information 134 containing the current total number of pieces of the pointer information on the DVD 101 and the last address, etc. of the area on the DVD 101 on which the playback list pointer table 131 is recorded; and a first to m-th playback list pointers 135 indicating the numbers of the set playback sequence information 123 associated with a first to m-th playback lists set by the user in the above mentioned set playback sequence information 123.

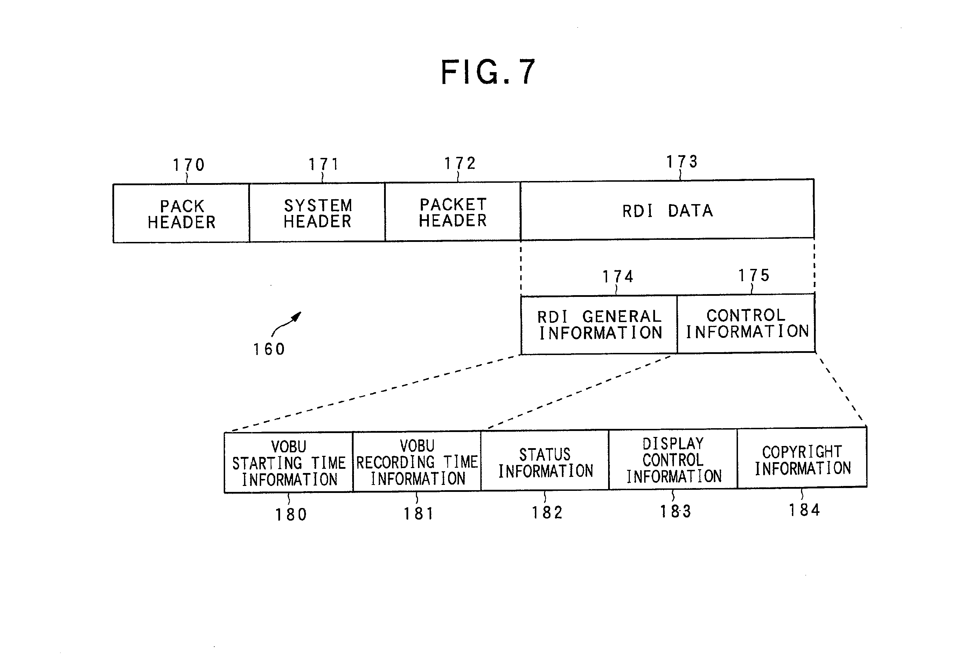

The data configuration of the RDI pack 160 is described below by referring to FIG. 7.

As shown in FIG. 7, the RDI pack 160 is configured by: a pack header 170 having information such as a physical address (pack start code) in which the pack is recorded, an SCR, etc.; a system header 171 and a packet header 172 having a physical address (system header start code) in which the system header of the pack is recorded and the attribute address of a data stream; and RDI data 173 indicating the actual data of an RDI.

RDI data 173 comprises RDI general information 174 having time information on the VOB unit 114, and control information 175 having DCI (Display Control Information) showing control information at the time of displaying the VOB unit 114 and copyright information: CCI (Copy Control Information) indicating whether copying is possible or not.

The RDI general information 174 is configured by VOBU playback starting time information 180 indicating the playback starting time on the playback time axis of the VOB unit 114 containing the RDI pack 160; and VOBU recording time information 181 indicating the recording time of the RDI pack 160. The control information 175 is configured by: status information 182 indicating the presence and absence, etc. of the display control information and copyright information; actual display control information 183: and copyright information 184.

In the recording format of the hierarchical structure shown in FIG. 5, each section is prepared for record along a real time axis, and data can be deleted and edited for each VOB unit 114 by performing a playback process based on the logical structure described later.

The logical format for logical control of the playback state (that is, the playback order or the range of the contents information to be played back among the contents information) when the contents information recorded on the DVD 101 is played back is described below by referring to FIG. 8.

FIG. 8 shows the logical format in the hierarchical structure, but the contents information on the DVD 101 is physically recorded in the state shown in FIG. 5, and the logical format is obtained as a result of describing the range and playback order of the contents information to be played back as described above in the hierarchical structure using each navigation information.

First, the logical format of the object record sequence information 122 is described below.

As described above, the object record sequence information 122 indicates the recording sequence of each object. When the VOBs 113 are played back according to the object record sequence information 122, the user is allowed only to play back the VOBs 113 in the recorded order, and there is only one playback state.

That is, in the case shown in FIG. 8, the first program (as described above, a program corresponds to a series of objects recorded on the DVD 101 after a recording process is started until it terminates) 190#1 is recorded earlier than the second program 190#2. In this case, the playback order which can be set as the object record sequence information 122 is only first program 190#1 → second program 190#2.

Next, each program 190 is logically configured by one or more cells 191. The cell 191 is all or a part of the program 190. In one cell 191, the contents information is to be continuous according to the standards. That is, each program 190 is configured by one or more cells 191.

For example, assuming that a one-hour broadcast program is recorded on the DVD 101 as the VOB 113, one program 190#3 is configured by only one cell 191#3 as the second program 190 and the third cell 191 shown in FIG. 8.

On the other hand, when the object record sequence information 122 is set such that the formed program 190 can be divided before or after the part of the program 190 which cannot be played back (for example, the VOB 113 corresponding to the period of a commercial in the broadcast program is deleted and defined as not being played back, etc.), it is standardized that only the cells 191 are divided before or after the part not to be played back according to the current recording standards (refer to the first program 190#1, the first cell 191#1, and the second cell 191#2 shown in FIG. 8).

Normally, as shown in FIG. 8, as for the relationship between each of the logically configured cells 191 and each of the physically formed VOBs 113, each cell 191 is associated with the one VOB 113. Therefore, assuming that one cell 191 is deleted according to the object record sequence information 122, the corresponding VOB 113 also cannot be played back.

Described below is the logical format of the set playback sequence information 123.

As described above, the set playback sequence information 123 (user defined program chain) is also referred to as a recording standard playback list, and the user can arbitrarily set and record it such that all or a part of a plurality of VOBs 113 can be played back in an optional order. Therefore, according to the set playback sequence information 123, the above mentioned program 190 does not exist and plural pieces of set playback sequence information 123 can be set.

The set playback sequence information 123 can be logically configured by one or more definition cells (can also be referred to as logical cells) 192 as shown in FIG. 8. Each definition cell 192 contains the information logically indicating the playback section (as a part of each VOB 113) arbitrarily set by the user and the playback order of each playback section, and can be set such that each VOB 113 is referred to and played back. This is a device in a standard for realizing a plurality of playback states with the smallest possible change in the original VOB 113.

To be more practical, as shown in FIG. 8, for example, the first definition cell 192#1 specifying a part of the first VOB 113 #1 as a playback section, the second definition cell 192#2 specifying a part of the second VOB 113#2 as a playback section, and the third definition cell 192#3 and the fourth definition cell 192#4 for specifying different parts in the third VOB 113#3 as playback sections are logically set. They are defined such that they can be played back in the order of the first definition cell 192#1 → the second definition cell 192#2 → the third definition cell 192#3 → the fourth definition cell 192#4. Thus, one set playback sequence information 123 can be configured.

When two or more definition cells 192 are set for each VOB 113, a plurality of definition cells 192 can commonly use a part of the VOB 113.

In the above mentioned logical format, by specifying the section recorded in real time in the physical structure, the contents information to be viewed by an audience can be formed.

### [Data Structure of Pack (PES packet)]

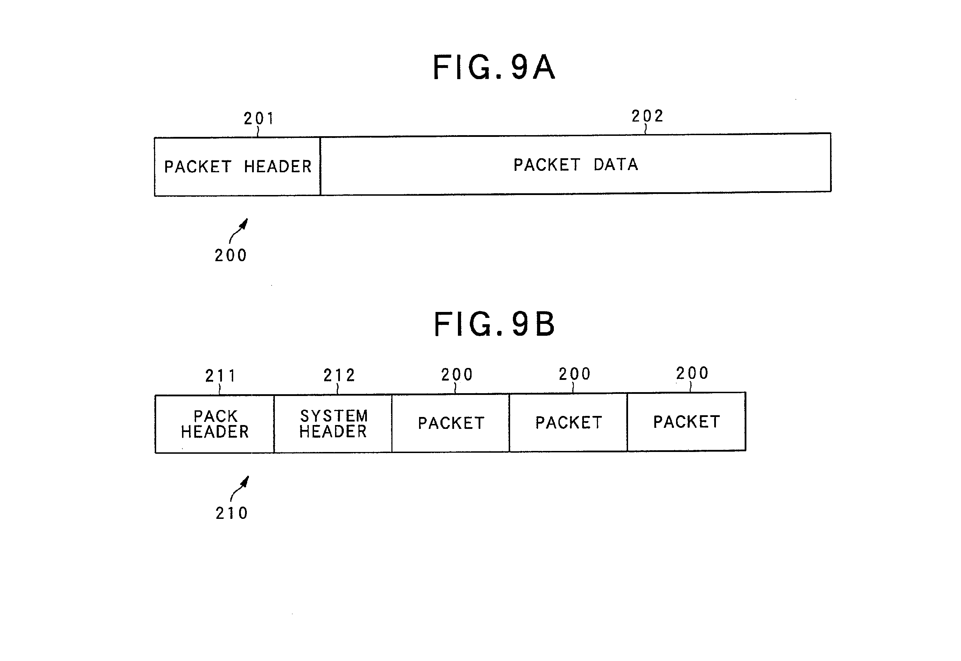

The structure of a PES (packetized elementary stream) packet (hereinafter referred to as a PES packet) which is a basic unit of a data stream (element data of video data (video packet) or audio data (audio pack), etc.) is described by referring to FIG. 9.

The PES packet has a similar configuration in the video system and the video recording system, and each pack is obtained by combining a plurality of PES packets, and is configured with a pack header and a system header.

Furthermore, the plurality of packs are combined with the additional information about the navi-pack 41 in the video system, and with the additional information about the RDI pack 160 in the video recording system, thereby forming the VOB units 30 and 114 as shown in FIG. 1 or FIG. 5.

FIG. 9A shows the data configuration of the PES packet. FIG. 9B shows the data structure of the pack data configuring the above mentioned video packs 42 and 161 or the audio packs 43 and 162, etc.

A PES packet 200 is a basic unit of a data stream referred to as a program stream (hereinafter referred to as a PS) in the MPEG 2 system, the data described later is added to a plurality of PES packets 200, thereby configuring each data pack such as the video packs 42 and 161 or the audio packs 43 and 162, etc.

As shown in FIG. 9A, the PES packet 200 is formed by putting an elementary stream in a packet, and includes a PES packet header 201, and a packet data (hereinafter referred to as a PES packet data) 202. The PES packet data 202 includes image data or audio data to be actually displayed and outputted.

The PES packet header 201 includes a stream ID indicating the type of data contained in the PES packet data 202, the PTS (presentation time stamp), the DTS (decoding time stamp), etc.

The DTS is the time information indicating the time outputted in the picture data decoded from the buffer in the decoder for decoding a system stream, and the PTS is the time information indicating the time at which an image corresponding to the picture data is actually displayed.

When the PES packet data 202 is the audio packs 43 and 162, the PTS and the DTS has the same values. Therefore, only the representative PTS is recorded.

The PTS and the DTS are included in the PES packet header 201 only when the header of the access unit (that is, each picture in the case of image information, and the AAU (audio access unit) in the case of audio information) exists in the PES packet data 202. Therefore, the size (number of bits) of the PES packet header 201 depends on the presence and absence of the optional information such as the included PTS, DTS, etc.

Each pack 210 is configured by including a plurality of PES packets 200, and one pack 210 is configured by a pack header 211, a system header 212, and a plurality of PES packets 200 as shown in FIG. 9B.

An SCR (system clock reference) is recorded in the pack header 211. The SCR is to be contained in the PS at least once every 0.7 msec, and indicates the time at which the pack 210 including the SCR reaches the buffer in the decoder.

The SCR is more practically explained below. That is, the SCR indicates the read starting time on the playback time axis at which inputting the data contained in each pack 210 into the buffer in the decoder is to be started.

The size of the pack header 211 is represented by the number of bytes obtained by adding the dummy data to 14 bytes, and the system header 202 contains the information about the size of the buffer, etc. Whether or not the system header 202 is included in each pack 210 can be arbitrarily set. When it is included in the pack 210, it is generated immediately after the pack header 211.

The pack header 211 of the video packs 42 and 161 or the pack header 211 of the audio packs 43 and 162, which are at the head of the VOB 10 in the video system or at the head of the VOB unit 114 in the video recording system, has a PES extension information area in addition to the SCR information.

The PES extension information refers to the playback control information such as the copyright information (copy protection information) about the pack, and the extension information for extension of the playback state when the actual data is played back, and the user and the provider of AV information arbitrarily define the setting information as to whether or not recording the video data or the audio data is to be prohibited, and the setting information about the video process, the audio process, and other processes.

Practically, the PES extension information is configured by the PES extension control information (PES extension flag) indicating whether or not there is data of PES extension, and actual data indicating the contents of the actual extending process where there is a PTS.

The above mentioned pack 210, that is, a plurality of the video packs 42 and 161 or a plurality of the audio packs 43 and 162 are combined, and the additional information about the navi-pack 41 in the video system and the RDI pack 160 in the video recording system is included to form the VOB units 30 and 114 in the video system or the video recording system.

### (II) Embodiment of format conversion

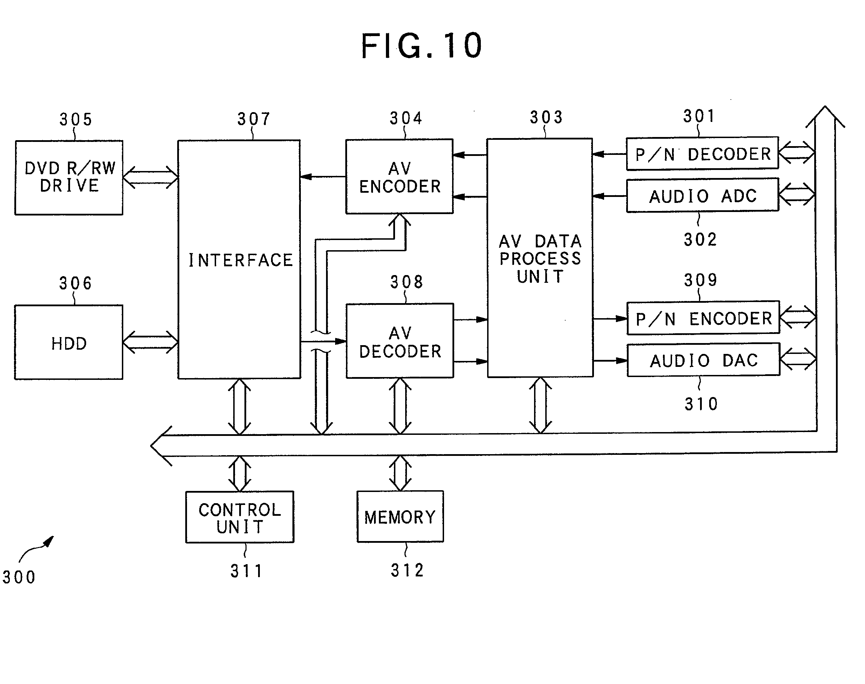

The information record and playback apparatus obtained by applying the format converting apparatus according to the present invention on the premise of the above mentioned recording standards is described below by referring to FIGs. 10 to 18.

### [Basic Configuration of Information Record and Playback Apparatus]

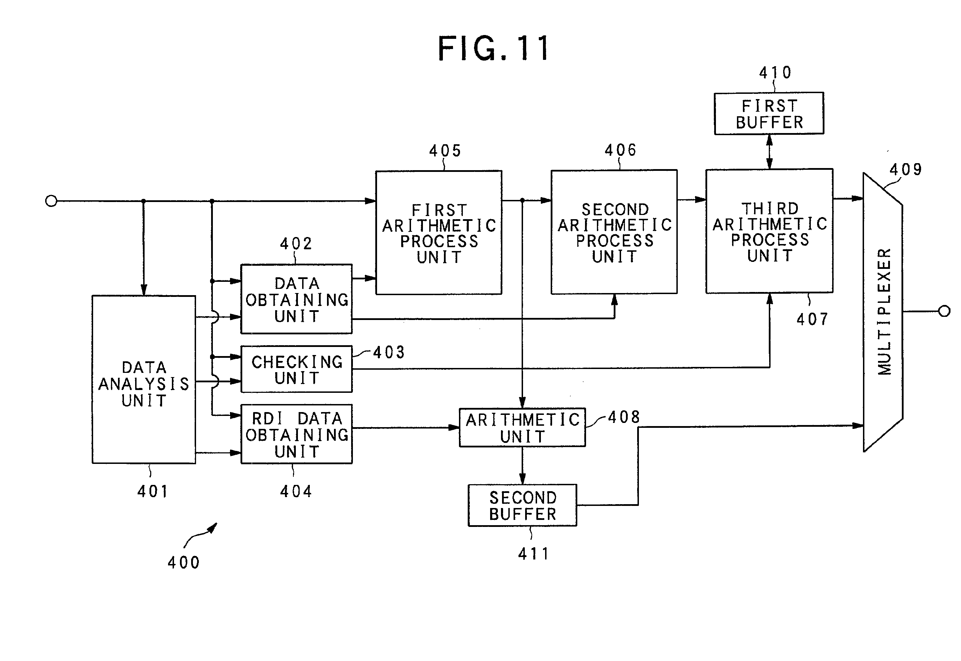

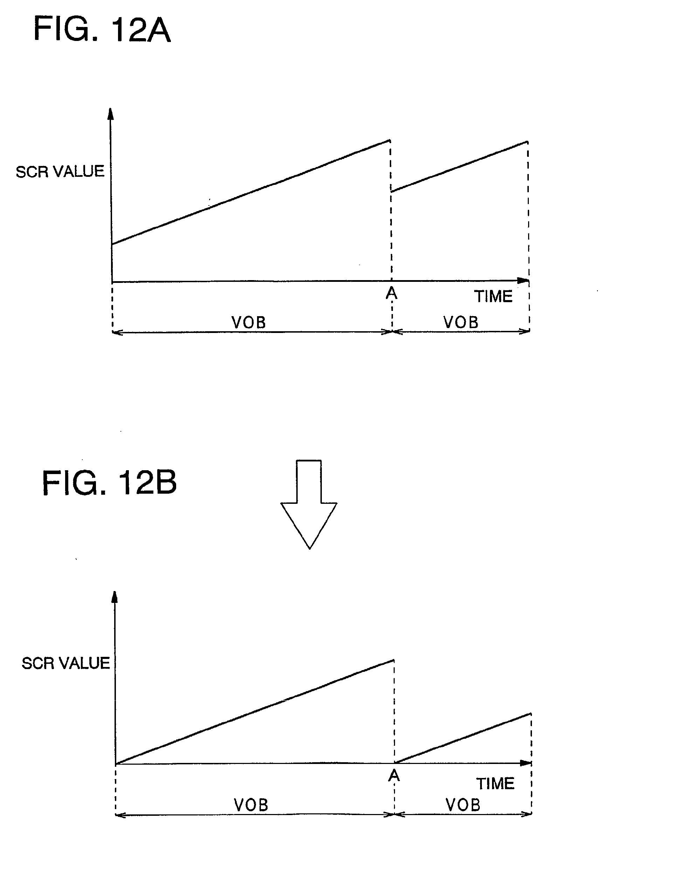

First, the configuration of the information record and playback apparatus according to the present embodiment is described below by referring to FIGs. 11 and 12.

FIG. 10 is a configuration view showing the basic configuration of the information record and playback apparatus. FIG. 11 is a configuration view showing the configuration of the format conversion unit in a interface 307 of the information record and playback apparatus.

An information record and playback apparatus 300 shown in FIG. 10 comprises: a P/N decoder 301 for converting a PAL signal or an NTSC signal which are video information into a digital signal; an audio A/D converter (hereinafter referred to as an audio ADC) 302 for converting audio data of an analog signal into digital data; an AV data process unit 303 for performing a common video and audio processes on the converted digital signals; an AV encoder 304 for encoding the AV data into the record system of the video system or the video recording system; a DVD-R/RW drive 305 for storing the DVD not shown in the attached drawings and recording and playing back AV data; a hard disk (hereinafter referred to as an HDD) 306 for recording and playing back of the AV data; an interface 307 for control of reading and writing AV data on the DVD-R/RW drive 305 and the HDD 306; an AV decoder 308 for decoding into AV data from the record system of the video system or the video recording system; a P/N encoder 309 for converting video information which is a digital signal into a PAL signal or an NTSC signal which is an analog signal; an audio D/A converter (hereinafter referred to as an audio DAC) 310 for converting audio data which is a digital signal into analog data; a control unit 311 for controlling each unit; and memory 312 used in operating each unit.

The P/N decoder 301 receives a PAL signal or an NTSC signal which is an analog signal outputted from a television tuner, etc. not shown in the attached drawings. The P/N decoder 301 converts an input PAL signal or an input NTSC signal into a digital signal, and outputs it to the AV data process unit 303.

Like the P/N decoder 301, the audio ADC 302 receives audio data which is an analog signal outputted from a television tuner, etc. not shown in the attached drawings, and the audio ADC 302 converts the inputted audio data into a digital signal, and outputs the signal to the AV data process unit 303.

The AV data process unit 303 receives video data or audio data converted into a digital signal (hereinafter referred to simply as AV data), and the AV data process unit 303 switches paths for data switch, etc. to the AV encoder 304 for outputting the inputted AV data to the P/N encoder 309 and the audio DAC 310, and performs common digital video process and audio process on a base band signal such as a graphic process and an OSD (on screen display) process of the video data.

The AV encoder 304 receives AV-processed AV data, and encodes the inputted AV data into the record system of the above mentioned video system or video recording system, and outputs the encoded AV data to the DVD-R/RW drive 305 and the HDD 306 through the interface 307.

The interface 307 performs the process as an interface when AV data is recorded to the DVD-R/RW drive 305 and the HDD 306, and controls the DVD-R/RW drive 305 and the HDD 306 when the AV data is recorded and played back under control of the control unit 311.

The interface 307 also includes a format converting unit 400 for converting AV data from the video recording system to the video system, and the details of the format converting unit 400 is described later.

The AV data encoded into the record system of the video system or the video recording system is decoded by the AV decoder 308 into digital data, and the AV data is outputted to the AV data process unit 303.

The P/N encoder 309 receives a PAL signal or an NTSC signal which is a digital signal outputted from the AV data process unit 303, and the inputted PAL signal or the inputted NTSC signal is converted into an analog signal, and outputted to a display unit, etc. not shown in the attached drawings.

Like the P/N encoder 309, the audio DAC 310 receives audio data which is a digital signal outputted from the AV data process unit 303, and the inputted audio data is converted into an analog signal, and output to an external unit through a power amplifier unit not shown in the attached drawings.

The configuration of the format converting unit 400 in the interface 307 is described below.

As shown in FIG. 11, the format converting unit 400 comprises: a data analysis unit 401 for analyzing the data configuration of each pack 210; a data obtaining unit 402 for obtaining time stamp information of each pack 210 described later and the PES extension control information; a checking unit 403 for checking each audio pack, that is, the audio pack 161 in the video recording system; an RDI data obtaining unit 404 for obtaining predetermined RDI data in each RDI pack 160; a first arithmetic process unit 405 for converting time information; a second arithmetic process unit 406 for deleting PES extension information; a third arithmetic process unit 407 for converting the audio pack 162; an arithmetic unit 408 for computing the data of the navi-pack 41 in the video system from the RDI data; a multiplexer 409 for replacing the data stream having the RDI pack 160 on which a time information converting process is performed with the navi-pack 41; a first buffer 410 used when the audio pack 162 is converted; and a second buffer 411 for generating the navi-pack 41.

The time information converting process, the PES extension information deleting process, the audio pack converting process, and playback control information converting process for converting an RDI pack into a navi-pack are described later in detail.

The operations of each of the data analysis unit 401, the data obtaining unit 402, the checking unit 403, the RDI data obtaining unit 404, each arithmetic process units 405, 406, and 407, the arithmetic unit 408, the multiplexer 409, and each of the first buffers 410 and 411 are described below by referring to the description of each unit.

According to the present embodiment, the format converting unit 400 configures the format converting apparatus according to the present invention, and the data analysis unit 401, the data obtaining unit 402, the checking unit 403, the RDI data obtaining unit 404, the arithmetic process units 405, 406, and 407, the arithmetic unit 408, and the multiplexer 409 configure the converting device according to the present invention.

The data analysis unit 401, the data obtaining unit 402, the first arithmetic process unit 405, and the third arithmetic process unit 407 configures the detection device, the obtaining device, the setting device, and the addition device respectively.

### [Time information converting process (offset process)]

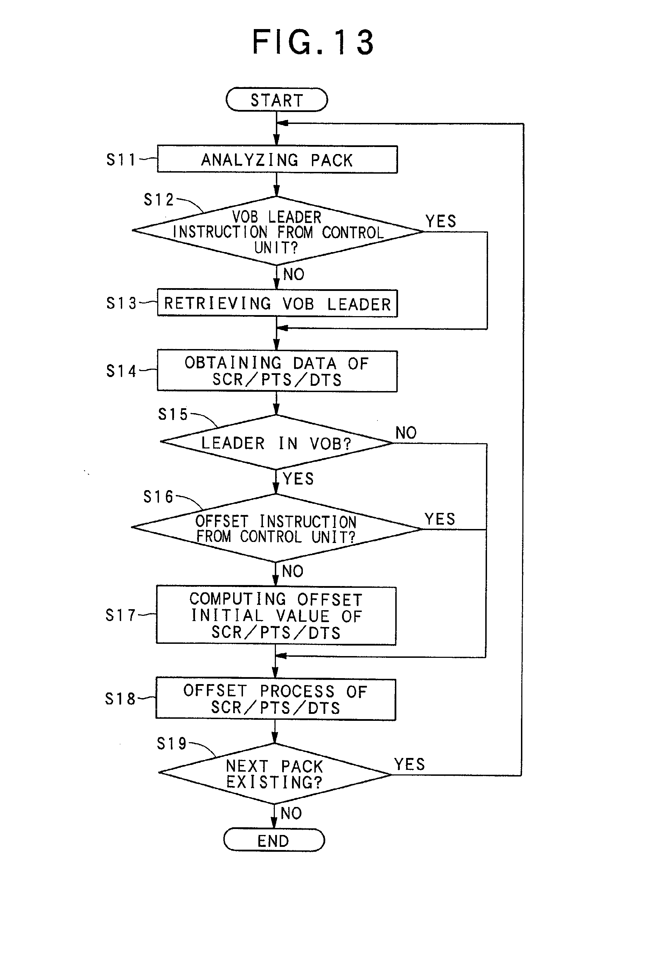

The time information converting process is described below by referring to FIGs. 12 and 13.

FIG. 12 shows the principle of the converting process (offset process) of time information according to the present embodiment. FIG. 13 is a flowchart of the operations of the converting process of the time information according to the present embodiment.

In the video system, the data format is basically the playback format, and the SCR (system clock reference) in the pack header 211 of the leading pack 210 in the leading VOB unit 30 of each VOB 10, that is, the time at which each pack 210 reaches the buffer in the decoder not shown in the attached drawings during playback has to be set to 0.

On the other hand, since the video recording system is necessarily based on the edition of dada recorded on the DVD, the SCR in the leading pack (hereinafter referred to simply as the leading pack) 210 in the leading VOB unit 114 in the VOB 113 in the data format configuration is not necessarily set to 0, but an optional value can be used.

That is, in the video recording system, the leading VOB unit 114 in the VOB 113 can be deleted, and the playback process can be performed although the value of the SCR in the leading pack of the VOB 113 is not 0.

Due to the difference in each format described above, when the data in the video recording system is converted into the data in the video system, it is necessary that the value of the SCR in the leading pack 210 of the VOB 113 is replaced with 0, and the values of 0 of the SCR in other packs are to be offset based on the SCR of the leading pack.

That is, as shown in FIG. 12A, in the video recording system, when the value of the SCR is not 0, the value of the SCR in the leading pack of the VOB 113 is set to 0, and the values of the SCR of the subsequent packs are to be offset as shown in FIG. 12B.

Similarly, the time information PTS indicating the time at which the image corresponding to the picture data in the PES packet header 201 of each PES packet 200 is actually displayed, and the time information DTS indicating the time at which the picture data decoded in the buffer in the decoder for decoding a system stream is outputted in the data other than audio data is to be offset based on the SCR of the leading pack 210 of the VOB 113 or on the SCR offset in the pack 210 containing the PES packet 200.

According to the present embodiment, the above mentioned processes (hereinafter referred to as an offset process) are performed by the data analysis unit 401, the data obtaining unit 402, and the first arithmetic process unit 405.

The data analysis unit 401 is designed to read each pack 210 from a data stream, and it is detected whether or not the read pack 210 is the leading pack of the VOB 113, that is, the leading pack of the leading VOB unit 114 in the VOB 113 (hereinafter referred to as a leader retrieving process) each time a pack 210 is read, so that the information indicating whether or not the pack is the leader in the VOB 113 (hereinafter referred to as leader information) is to be outputted to the data obtaining unit 402.

Practically, when the leading pack retrieving process is performed to detects the leader of the VOB 113, the data analysis unit 401 reads the SCR in the pack header 201 in the read pack 210 to detect the position indicating the discontinuous point of the SCRs. To be more practical, based on the SCRs in the preceding and subsequent packs 210, it is checked whether or not the corresponding SCR is the discontinuous point.

For example, as shown in FIG. 12A, when the SCR is assigned to each VOB 113, the data analysis unit 401 detects the discontinuous point of the SCRs, that is, the point A shown in FIG. 12A, the detected point A is defined as the leader of the VOB 113, that is, the starting point of the time information, and the pack in the position is defined as the leader. The first arithmetic process unit 405 is notified of the definitions through the data obtaining unit 402.

The data analysis unit 401 also analyzes the positions of the SCR, PTS, and DTS (hereinafter referred to as a time stamp) for each of the read packs 210, and the information indicating the position of the time stamp (hereinafter referred to as time stamp position information) is outputted to the data obtaining unit 402.

The data obtaining unit 402 obtains the values of the time stamps (hereinafter referred to as time stamp information) of the SCR, PTS, and DTS according to the time stamp position information of the SCR, PTS, and DTS of each of the inputted packs 210, and the obtained time stamp information is outputted to the first arithmetic process unit 405.

The first arithmetic process unit 405 receives, in addition to a data stream, the time stamp information, the time stamp position information, and the leader information through the data obtaining unit 402 for each pack 210.

When the pack 210 input according to the leader information is recognized as the leader in the VOBs 113, the first arithmetic process unit 405 computes the reference value of the offset process based on the SCR value of the time stamp information, and performs the offset process of each time stamp in the pack 210 in the data stream and the replacement process of the time stamp information according to the reference value of the offset process and the inputted time stamp position information.

According to the present embodiment, the time stamp information of the SCR, PTS, and DTS of each VOB 113 in the video recording system can be converted into one of the video system by performing the offset process for each pack.

The operation of the offset process is described below by referring to FIG. 13.

The operation of the offset process is performed according to the instruction of the control unit 311 shown in FIG. 10.

First, the start of the operation of the format conversion is instructed by the control unit 311, and the drive I/F starts reading a data stream configured by the video recording system from the HDD 306. Then, the leading pack 210 of the VOB 113 is inputted to the data analysis unit 401, and the data analysis unit 401 analyzes the pack 210 (step S11).

Practically, each time stamp position information of the SCR, PTS, and DTS of the corresponding pack is obtained.

Then, the data analysis unit 401 determines whether or not there is an instruction from the control unit 311 that the pack is the leading pack (step S12). If there is no instruction, the leader retrieving process of the VOB 113 is performed (step S13).

Practically, when the pack 210 is the leader of the VOB 113, the leader information about the pack 210 is outputted to the data obtaining unit 402 together with the time stamp position information, the leader retrieving process of the pack is not performed, and control is passed to step S14.

As for the instruction from the control unit 311 indicating whether or not the pack is the leading pack, when the format conversion is performed from the start of the DVD, it can be recognized by the control unit 311 that the first read pack is the leading pack. Additionally, when the user performs the format conversion on one title, the pack read in advance or first in the user operation can be recognized as the leading pack. Therefore, the control unit 311 can recognize in advance that the first read pack is the first pack.

Therefore, when it is recognized, the control unit 311 notifies the data analysis unit 401 of the recognition. Therefore, the above mentioned determination can be made according to the present embodiment.

Then, the data obtaining unit 402 obtains the SCR of each pack 210 of the VOB 113 and the time stamp information about the PTS and the DTS of the PES packet, and the time stamp information is outputted to the first arithmetic process unit 405 (step S14).

Then, the first arithmetic process unit 405 determines whether or not the inputted pack is the leader according to the leader information (step S15). If it is the leader, it is determined whether or not an offset initial value from the control unit 311 is set (step S16). If it is not the leader, control is passed to step S18.

For example, the pack read in advance by the control unit 311 can be recognized as the leading pack. In this case, based on the SCR value of the pack, or in other processes on the control unit 311, the offset initial value can be obtained in advance. In this case, the control unit 311 notifies the first arithmetic process unit 405 of the value, thereby making the determination as to whether or not the setting has been performed.

Then, if the first arithmetic process unit 405 has not set the offset initial value from the control unit 311 for the pack 210, the arithmetic process of the offset initial value is performed based on the value of the SCR of the pack (step S17).

Then, the first arithmetic process unit 405 computes each time stamp information about the pack 210 based on the offset initial value computed or set in advance, that is, each value of the SCR, PST, and DTS, and the replacement process is performed (step S18).

Finally, the data analysis unit 401 determines whether or not there is another pack 210 to be read (step S19). If there is no packs, the offset process is terminated. If there is another pack 210 to be read, then control is passed to step S11.

Thus, the leading SCR in the VOB 113 in the video recording system is set to 0 in accordance with the video system, and the offset process can be performed on each time stamp information about the corresponding VOB 113 and other VOBs 113. Therefore, the time stamp information can be converted into the format in accordance with the video system.

As a result, the format in which the contents information can be correctly played back in the video system can be realized, and it is not necessary to play back and output continuous contents information when the format is converted, that is, it is not necessary to set continuous video information or audio information. Therefore, the format conversion can be performed at a high speed without data deterioration.

### [Deleting process on PES extension information]

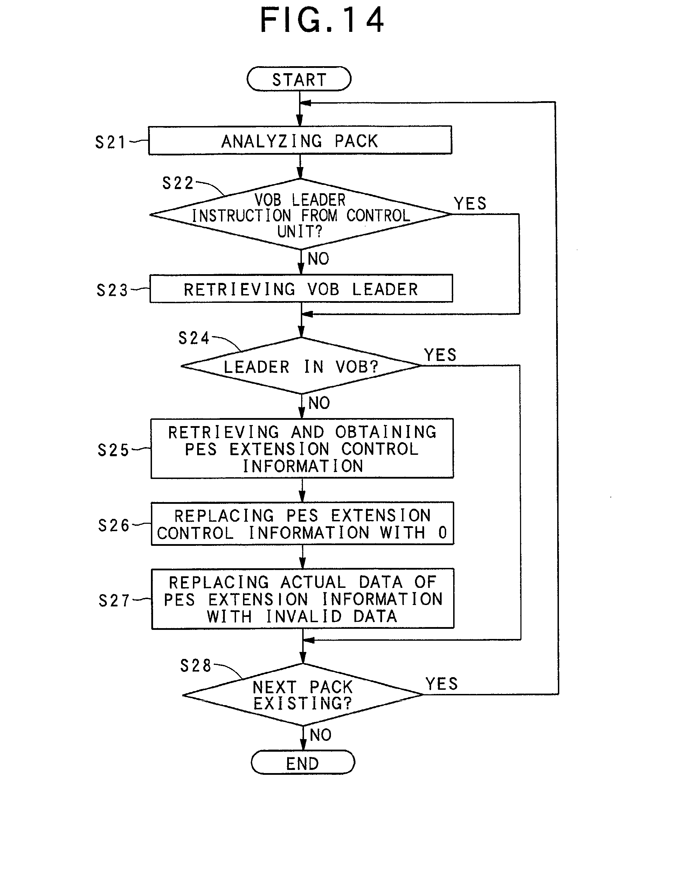

The deleting process on PES extension information is described below by referring to FIG. 14.

FIG. 14 is a flowchart of the operation of the deleting process on the PES extension information according to the present embodiment.

The PES extension information refers to playback control information about the contents information. Practically, it refers to the copyright information (about copy protection such as prohibit information against the copy of data) set by the provider (author) who provides contents information to be recorded on a DVD for each VOB 10, 113, or VOB unit 30, 114, and the user who records the information, and the extension information for the playback state of the aspect ratio, etc. used when video data is displayed on the screen.

As for the video system, since the video system is a format for playback basically, the configuration of the data format normally requires the PES extension information only in the audio pack 43 and video pack 42 recorded in the leading part of each VOB 10.

That is, the video system is basically used for playback, and data is read in a VOB 10 unit. Therefore, there is no problem when data recorded on the DVD can be played back and edited only according to the PES extension information recorded in the leading pack 210 in the VOB 10.

Practically, the PES extension information is only to be recorded in accordance with a standard when it is recorded in the first video pack (hereinafter referred to simply as the first video pack) 42 and the first audio pack (hereinafter referred to simply as the first audio pack) 43 in the first VOB unit 30 of the VOB 10.

On the other hand, in the video recording system, it is a precondition that data recorded on a DVD is edited, and the data format requires segmentation of data for each VOB unit 114, and each of a plurality of VOB units 114 forming each VOB 113 requires PES extension information recorded in the first video pack 161 and the first audio pack 162.

Depending of the difference in the above mentioned formats, the data in the video recording system can be converted into the data in the video system by deleting the PES extension information in the VOB unit 114 other than the VOB unit 114#1 as the leader in the VOB 113 in the video recording system.

According to the present embodiment, the PES extension control information is nullified to delete the PES extension information, the actual data has to be deleted. Practically, the value of the PES extension control information is set to 0, and the value in the position of the actual data is filled with invalid data, for example, the 'F' data.

According to the present embodiment, the PES extension deleting process is performed by the data analysis unit 401, the data obtaining unit 402, and the second arithmetic process unit 406.

Basically as in the above mentioned offset process, the data analysis unit 401 reads each pack 210 from the data stream, the leader retrieving process is performed, and it is determined whether or not the inputted pack is the leading pack 210.

Practically, the data analysis unit 401 performs the leader retrieving process in which it is detected for each pack 210 read from the data stream whether or not the read pack 210 is the leader in the VOB 113, that is, the leading video pack 161 or the leading audio pack 162 of the leading VOB unit 114 in the VOB 113.

In the leader retrieving process, as in the above mentioned offset process, the SCR in the PES packet header 201 is read, and the discontinuous point of the SCRs can be detected.

Furthermore, the data analysis unit 401 analyzes the positions of the PES extension information, that is, the PES extension control information, and the actual data portion for each of the read packs 210, and the information indicating the positions of the PES extension information (hereinafter referred to as PES position information) is outputted to the data obtaining unit 402.

When it is determined that the pack is not the leading pack, the data obtaining unit 402 retrieves the PES extension control information in the pack by the data obtaining unit 402 according to the PES position information obtained by the data analysis unit 401, obtains the PES extension control information in the retrieving process, and outputs the information to the second arithmetic process unit 406 together with the PES position information.

The second arithmetic process unit 406 receives an offset-processed data stream, receives the PES extension information and the PES position information for each pack 210, the above mentioned PES extension deleting process is performed on the pack which is not the leading pack of the VOB 113 according to the inputted PES extension information, that is, the value of the PES extension control information is set to 0 according to the PES position information, and the value of the actual data is replaced with the 'F' data.

According to the present embodiment, the PES extension information process is performed on each pack, thereby converting the PES extension information of each pack 210 of each VOB 113 in the video recording system into one of the video system.

The operation of the PES extension deleting process is described below by referring to FIG. 14.

The operation of the PES extension deleting process is performed at an instruction of the control unit 311 shown in FIG. 10.

First, the start of the operation of the format conversion is specified by the control unit 311, the drive I/F starts reading a data stream configured by the video recording system from the HDD 306, the leading pack 210 of the VOB 113 is inputted to the data analysis unit 401, and the data analysis unit 401 analyzes the pack 210 (step S21).

Practically, the positions of the actual data of the PES extension control information and the PES extension information in each pack, that is, each piece of PES position information, are obtained.

Then, it is determined by the data analysis unit 401 whether or not the control unit 311 has issued an instruction that the pack 210 is the leading pack 210 (step S22). If there is no instruction, then the leader retrieving process on the VOB 113 is performed (step S23).

Practically, if the pack 210 is the leader of the VOB 113, the leader information about the pack 210 is outputted to the data obtaining unit 402 together with the time stamp position information, and the leader retrieving process on the pack is not performed, and control is passed to step S24.

Then, the data analysis unit 401 determines whether or not the inputted pack is the leader according to the leader information (step S24). If it is the leader, then the PES extension deleting process is not performed, thereby terminating the operation.

On the other hand, if it is determined that the pack is not the leader, the data obtaining unit 402 retrieves the PES extension control information in the pack according to the PES position information obtained by the data analysis unit 401, the PES extension control information about the pack is obtained and outputted to the second arithmetic process unit 406 (step S25).

Then, the second arithmetic process unit 406 sets to 0 the value of the PES extension control information in the pack (leading pack of the VOB 113) 210 of the obtained PES extension information (step S26), and the value of the actual data is replaced with the invalid data of the 'F' data (step S27 (padding process).

Finally, the data analysis unit 401 determines whether or not there is another pack to be read (step S28). If there is no packs, the PES extension deleting process is terminated. If there is another pack to be read, then control is passed to step S21.

Thus, since the PES extension information other than that in the leader of the VOB, that is, PES extension control information and the actual data can be nullified, the PES extension information can be converted to be information in accordance with the video system.

As a result, the format in which the contents information can be correctly played back in the video system can be realized, and it is not necessary to play back and output continuous contents information when the format is converted, that is, it is not necessary to set continuous video information or audio information. Therefore, the format conversion can be performed at a high speed without data deterioration.

### [Audio Pack Converting Process]

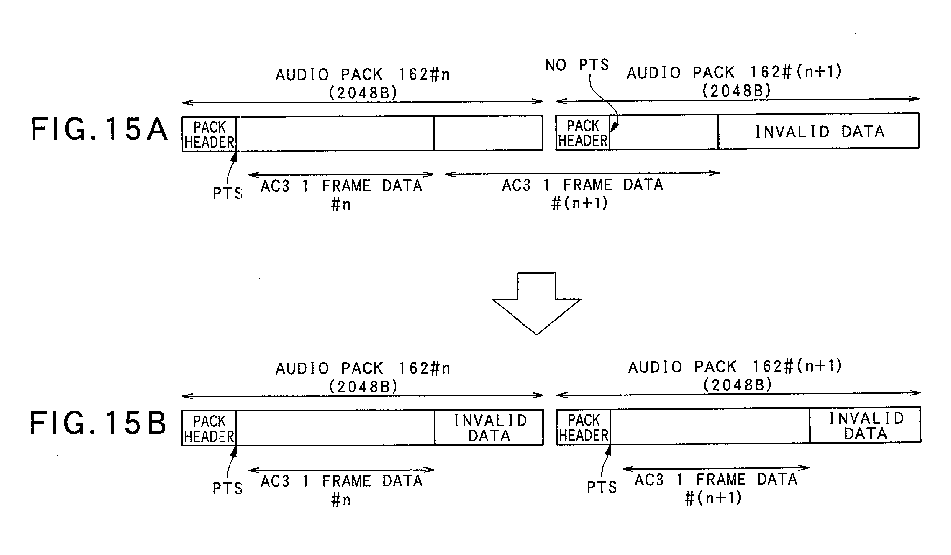

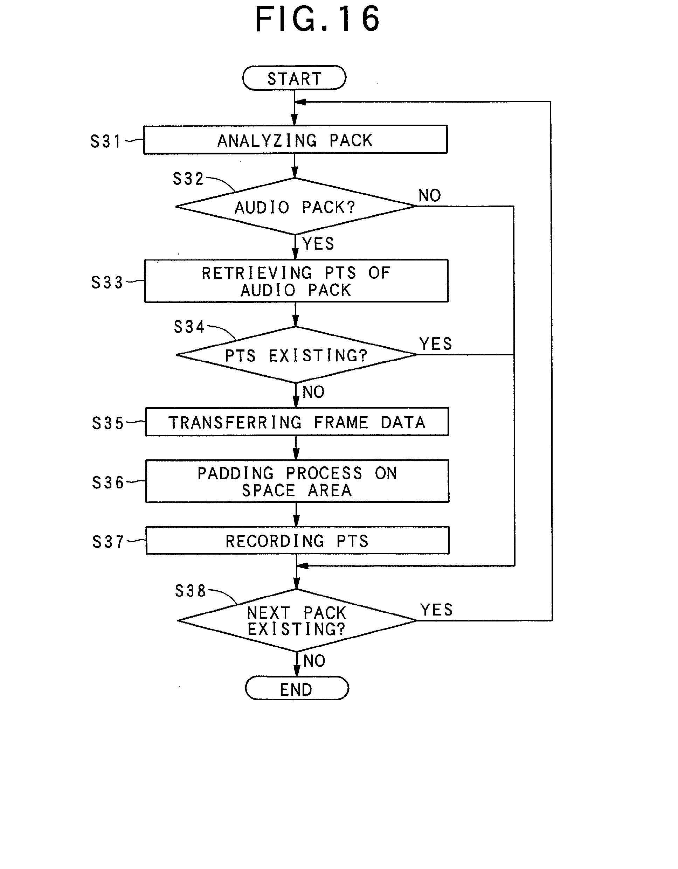

The audio pack converting process is described below by referring to FIGs. 15 and 16.

FIG. 15 shows the principle of the audio pack converting process according to the present embodiment. FIG. 16 is a flowchart showing the operation of the audio pack converting process according to the present embodiment.

When video data and audio data are recorded on a DVD, each piece of data is compressed. Normally, the MPEG 2 and audio compression, for example, AC (audio compression)-3 is performed for each frame. However, it is rarely that one frame corresponds to one pack. That is, data of one frame rarely corresponds to one pack.

In the video recording system, since the PTS is recorded in the video pack 161 for each video pack for convenience in playback, even if the video frame data corresponding to one frame is in two packs, it can be played back without any problem because the playback is performed based on the PTS of each video pack 161. However, in the video recording system, the data configuration can be complete for each VOB unit 114. Therefore, data can be adjusted by adding invalid data to the last audio pack 162, thereby solving the problem. Accordingly, in the audio pack 162, the PTS may not be recorded in each audio pack 162. Practically, there may not be the PTS in the last audio pack in the VOB unit 114.

On the other hand, in the video system, not only the video pack 42, but also the audio pack 43 has the PTS recorded in each pack 42 or 43. That is, in the video system, except the trailer of the VOB, it is not permitted that the PTS is not recorded in any of the packs 42 and 43.

Due to the difference in format, it is necessary to record a PTS in each audio pack 162 in the video recording system to convert the data in the video recording system into the data in the video system in the video packs 42 and 162.

That is, in the video recording system, in the audio pack 162 in the VOB, there can be the case in which no PTS is recorded. However, in the video system, it is necessary, except the trailer of the VOB, to record a PTS in each audio pack, thereby requiring the above mentioned adjustment.

To perform the data adjustment according to the present embodiment, that is, to add a PTS to all audio packs 162, the AC-3 data is transferred to audio pack 162 having no PTS from the audio pack 162 immediately before the audio pack 162 having no PTS (first method), or the data for each frame of AC-3 is converted into the audio pack 162 for each pack (second method).

Practically, as shown in FIGs. 15A and 15B, in the first audio pack converting process, the data of the last one frame of AC-3 is transferred from the audio pack immediately before the last audio pack to the last audio pack, and a padding process is performed using invalid data 'F' so that the data length of each pack maintains a predetermined length.

In the last audio pack 162# (n + 1) in the VOB unit 114, data of one frame of AC-3 cannot be configured individually. Therefore, in the first audio pack converting process, in order to configure data of one frame of AC-3 held by the audio pack 162# (n + 1), other data in the data of one frame # (n + 1) of AC-3 is transferred from the audio pack 162#n immediately before the audio pack 162# (n + 1), as if there were data of one frame # (n + 1) of AC-3 in the audio pack 162# (n + 1) having no PTS. That is, as shown in FIG. 15B, all data of the frame data #(n + 1) of AC-3 is assigned to the last audio pack 162 #(n + 1).

Normally, in each audio pack 162, one or more pieces of AC-3 frame data is to be distributed. If data of one frame of AC-3 is assigned, the data format allows a PTS to be assigned to the audio pack 162.

Therefore, if there is data of one frame of AC-3 in the audio pack 162, that is, if there is the leading data in one frame of AC-3, then the PTS can be recorded in the audio pack 162.

In the first audio pack converting process, it is necessary to keep a predetermined data length of each audio pack 162 (basically 2,048 bytes). Therefore, the audio pack 162# (n + 1) in which the frame data of AC-3 is formed using the audio pack 162#n from which the frame data of AC-3 is transferred and the transferred AC-3 data is filled with the invalid data 'F' (hereinafter referred to as a padding process) so that the data length of each audio pack 162 can have a predetermined length.

In the second audio pack converting process, as shown in FIG. 15B, a pack of audio pack is generated for each piece of data of one frame of AC-3, a PTS is assigned to each audio pack, and a padding process is performed using the invalid data 'F' such that a predetermined data length of each pack can be maintained.

In the present embodiment, the above mentioned audio pack converting process is performed by the data analysis unit 401, the checking unit 403, and the third arithmetic process unit 407.

The data analysis unit 401 reads each pack from a data stream, basically as in the above mentioned offset process, and performs the leader retrieving process.

The data analysis unit 401 detects whether or not the read pack is an audio pack for each pack read from the data stream. If it is detected that it is an audio pack, then the information indicating the position of the audio pack (hereinafter referred to as audio pack position information) is outputted to the checking unit 403.

The checking unit 403 checks the audio pack 162 according to the audio pack position information outputted from the data analysis unit 401. However, a different converting process is performed in the checking process depending on the first or second method.

In the first audio pack converting process, the checking unit 403 retrieves a PTS of an audio pack, and detects the presence and absence of a PTS. If no PTS has been detected, the third arithmetic process unit 407 outputs an instruction signal to perform the audio pack converting process in the audio pack 162.

Furthermore, in the second audio pack converting process, the leader of the AC-3 frame is retrieved in each audio pack 162, and the information indicating the position of the leader of the AC-3 frame (hereinafter referred to as frame leader information) is outputted to the third process unit.

The third arithmetic process unit 407 receives a data stream on which the offset process and the PES extension deleting process have been performed, the converting process is performed on the audio pack 162 using a buffer according to the instruction signal outputted from the checking unit 403 or the frame leader position information about AC-3, and the result is outputted to the multiplexer 409.

Practically, as described above, in the first method, the remaining data for one frame of AC-3 is transferred from the audio pack 162#n immediately before the specified audio pack 162# (n + 1) to the audio pack 162# (n + 1), and the padding process for the data length, that is, the replacement with invalid data of the value of 'F' is performed in the audio pack 162# (n + 1) and the audio pack 162#1 immediately before it.

In the second method, the frame data of AC-3 is generated according to the frame position information of each AC-3 in each audio pack 162, and one audio pack 162 is generated for each of the generated frame data. In each audio pack 162, the padding process is performed on the data other than the frame data of AC-3.

The operation of the audio pack converting process is described below by referring to FIG. 16.

The operation of the audio pack converting process is performed at an instruction of the control unit 311 shown in FIG. 1.

First, the start of the operation of the format conversion is specified by the control unit 311, the drive I/F starts reading a data stream configured by the video recording system from the HDD 306, the leading pack 210 of the VOB 113 is inputted to the data analysis unit 401, and the data analysis unit 401 retrieves each data of each pack header, a packet header, etc. of the pack (step S31).

Then, the data analysis unit 401 determines whether or not the pack is an audio pack (step S32). If the pack is not an audio pack, the audio pack converting process terminates. If the pack is an audio pack, control is passed to step S33.

If the pack is an audio pack, the checking unit 403 retrieves the PTS of the audio pack (step S33), and it is determined whether or not there is a corresponding PTS (step S34).

If there is a PTS in the audio pack, the converting process is completed on the audio pack. If there is no PTS in the audio pack, control is passed to step S35.

If there is no PTS in the audio pack, then the third data arithmetic process unit transfers the frame data of the AC-3 in the audio pack from the audio pack immediately before (step S35), and the padding process is performed on the data other than the audio data in the audio pack and the audio pack immediately before it (step S36).

Then, the third arithmetic process unit 407 records the PTS in the audio pack (step S37).

Finally, the data analysis unit 401 determines whether or not there is another pack to be read (step S38). If there is no pack to be read, the audio pack converting process terminates. If there is another pack to be read, control is passed to step S31.

Thus, according to the present embodiment, the audio pack converting process is performed as described above.

The above mentioned audio pack converting process can be performed in the first method, but the audio pack converting process can also be performed in the second process. The operation in this case is described below.

In this case, instead of the operations in steps S33 and S34, the position of the data is checked by the checking unit 403 for each frame data of AC-3 in each audio pack 162. That is, the position information is obtained. In steps S35, S36, and S37, the third arithmetic process unit 407 generates the audio pack 162 for each data format of AC-3 according to the position information, and the padding process is performed on the audio pack 162 other than the frame data, thereby passing control to step S37.

Thus, since a PTS can be added to each audio pack, each audio pack can be converted into the information in accordance with the video system.

As a result, the format in which the contents information can be correctly played back in the video system can be realized, and it is not necessary to play back and output continuous contents information when the format is converted, that is, it is not necessary to set continuous video information or audio information. Therefore, the format conversion can be performed at a high speed without data deterioration.

### [Playback control information (RDI pack) converting process]

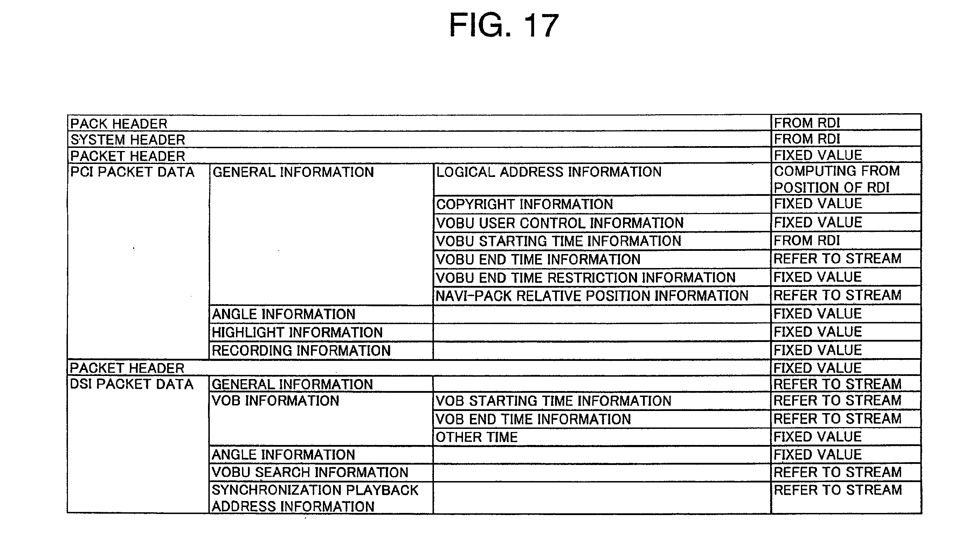

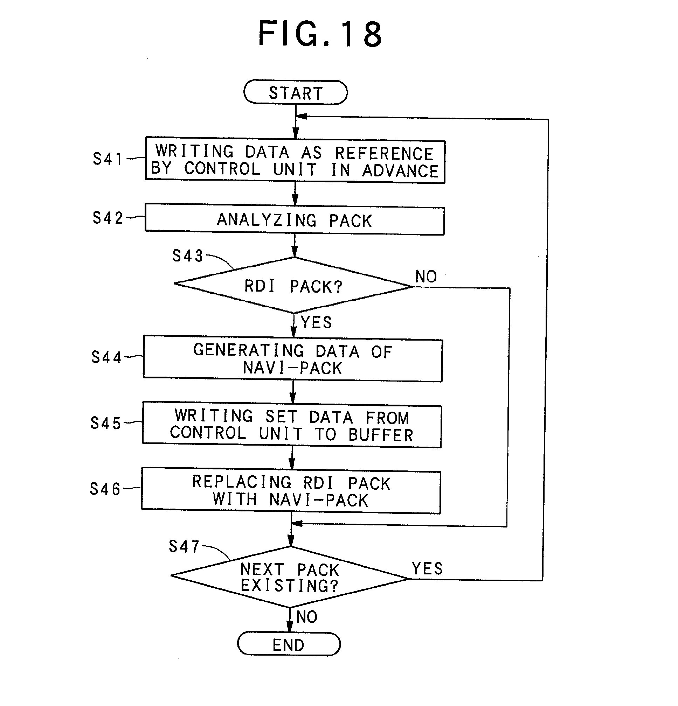

The playback control information converting process is described below by referring to FIGs. 17 and 18.

FIG. 17 shows the converting process performed when the value of the RDI pack 160 is converted into the navi-pack 41. FIG. 18 is a flowchart of the operation in the playback control information according to the present embodiment.

The video system is different from the video recording system, as described above, in data structure of the control data for playback output control or record edit control on the video packs 42 and 161 or the audio packs 43 and 162 in each of the VOB units 30 and 114 between the video system in which playback and edit processes are performed in VOB 10 unit for playback and the video recording system in which playback and edit processes are performed in the unit of the VOB unit 114. That is, the navi-pack 41 which is the control data of the video system is different from the RDI pack 160 which is the control data of the video recording system.

Practically, the navi-pack 41 of the video system is, as shown in FIG. 3, configured by the PCI data and the DSI data while the RDI pack 160 of the video recording system is configured by the RDI data as shown in FIG. 7.

Due to the above mentioned difference in format, it is necessary to perform a predetermined data conversion to convert the data in the video recording system into the data in the video system.

Practically, as shown in FIG. 17, in the pack header 52, the system header 53, and the VOBU playback starting time information 73 of the navi-pack 41, a value of the RDI pack 160 is set, and the logical address information is computed according to the logical position information about the RDI pack 160, and other values are set to predetermined values by a data stream and by the control unit 311.

To be more practical, the value of the pack header 170 in the RDI pack 160 is set in the pack header 52 excluding the SCR value, and the values of the system header 171 and the VOBU playback starting time information 180 in the RDI pack 160 are set without modification.

Furthermore, in the PCI packet data 50, a predetermined value in the video system is set in the packet header 54, and a copy-free value, a value indicating no user restriction, a value indicating no multi-angle, a value indicating no highlight, and a predetermined value are respectively set as fixed values in the copyright information 71, the VOBU user control information 72, the angle information 56, the highlight information 57, and the recording information 58. In the VOBU end time restriction information 75, a predetermined fixed value is set when there is no end time restriction information, and a playback end time is set when there is the end time restriction information.

The end code VOBU end time information 74 and the navi-pack relative time information are computed by reference to a data stream.

On the other hand, in the DSI packet data 51, the general information 80, the VOB starting time information 85, the VOB end time information 86, the VOBU search information 83, and the synchronization playback address information 84 are computed by reference to a data stream, and predetermined fixed values are set in other information 87 and the angle information 82.

According to the present embodiment, in order to perform the playback control information data converting process, that is, in order to convert the RDI pack 160 into the navi-pack 41, a conversion is performed in the first playback control information converting process in which the navi-pack 41 is generated by reference to the data stream based on the read RDI pack 160, and in the second playback control information converting process in which the navi-pack 41 into which a predetermined data value (data generated by reference to the data stream by the control unit 311) is incorporated is prepared, and the information about the read RDI pack 160 is incorporated.

According to the present embodiment, the above mentioned playback control information converting processes are performed by the data analysis unit 401, the RDI data obtaining unit 404, the arithmetic unit 408, and the second buffer 411.

The data analysis unit 401 detects whether or not the read pack is the RDI pack 160 for each pack read from the data stream. If it is detected that the read pack is the RDI pack 160, the information indicating the position of the RDI pack 160 (hereinafter referred to as RDI position information) is outputted to the RDI data obtaining information.

The data obtaining unit 402 receives a data stream and RDI position information, and the RDI data obtaining unit 404 obtains the data of the RDI pack 160 according to the RDI pack position information outputted from the data analysis unit 401.

Practically, the data required by the RDI data process unit in converting the RDI pack 160 into the navi-pack 41 is the pack header 170, the system header 171, and the VOBU playback starting time information 180 as described above. Therefore, the pack header 170, the system header 171, and the RDI general information 180 are obtained and outputted to the arithmetic unit 408.

The arithmetic unit 408 receives the RDI general information about the RDI pack 160 and the data stream. The arithmetic unit 408 obtains the data stream, computes each of the above mentioned values, computes the logical address information, and outputs the result to the second buffer 411.

The data set by the control unit 311 in advance or the data computed by the arithmetic unit 408 is written to the second buffer 411, and the navi-pack 41 is generated in the second buffer 411.

As described above, there are two methods for generating a navi-pack. For example, in the first playback control information converting process in which the navi-pack 41 is generated based on the read RDI pack 160, the navi-pack 41 is generated by the data generated by the arithmetic unit 408.

In the second playback control information converting process, the second buffer 411 stores the navi-pack 41 which is generated by the control unit 311 in advance, and into which a predetermined data value is incorporated. Predetermined data computed by the arithmetic unit 408 is incorporated into the navi-pack 41.

The second buffer 411 outputs the generated navi-pack 41 to the multiplexer 409 for each navi-pack 41.

The multiplexer 409 receives a data stream outputted from the third arithmetic process unit 407, that is, on which the time information converting process, the PES extension deleting process, and the audio pack converting process have been performed, and the navi-pack 41 converted by the second buffer 411, performs the replacing process on the converted navi-pack 41 for the data of the RDI pack 160 in the data stream at an instruction of the control unit 311, and the result is outputted to the DVD-R/RW drive 305.

The operation of the playback control information converting process is described below by referring to FIG. 18.

The operation of the playback control information converting process is performed at an instruction of the control unit 311 shown in FIG. 1.

First, the control unit 311 writes the data for reference in generating the navi-pack 41 to the second buffer 411 (step S41).

Then, the control unit 311 specifies the start of the format converting operation, the drive I/F starts reading the data stream configured by the video recording system from the HDD 306, the leading pack in the VOB 113 is inputted to the data analysis unit 401, and the data analysis unit 401 retrieves each data such as each pack header 211, the packet header 201, etc. of the pack 210 (step S42).

Then, it is determined by the data analysis unit 401 whether or not the read pack is the RDI pack 160 (step S43) based on the result of retrieving. If the RDI pack 160 is not detected, then control is passed to step S47. If the RDI pack 160 is detected, the RDI position information is outputted to the RDI data obtaining information, thereby passing control to step S44.

Then, the data obtaining unit 402 obtains the RDI general information 174 according to the inputted data stream and the RDI position information, and the arithmetic unit 408 generates the data of the navi-pack 41 based on the RDI general information 174 and the data stream as described above (step S44).

Then, the control unit 311 writes the predetermined set data computed from the data stream, etc. to the second buffer 411 (step S45).

Then, the navi-pack 41 is generated based on the written data and the data of the navi-pack 41 computed by the arithmetic unit 408, the generated navi-pack 41 is outputted by the multiplexer 409, and the RDI pack 160 in the data stream inputted by the multiplexer 409 replaces the navi-pack 41 (step S46).

Finally, the data analysis unit 401 determines whether or not there is another pack 210 to be read (step S47). If not, the playback control information (RDI pack) converting process terminates. If there is another pack 210 to be read, then control is passed to step S41.

Thus, since the RDI pack 160 can be converted into the navi-pack 41, the control information about each data pack in playback can be converted into the information in accordance with the video system.

As a result, the format in which the contents information can be correctly played back in the video system can be realized, and it is not necessary to play back and output continuous contents information when the format is converted, that is, it is not necessary to set continuous video information or audio information. Therefore, the format conversion can be performed at a high speed without data deterioration.

### [Conversion Recording Process]

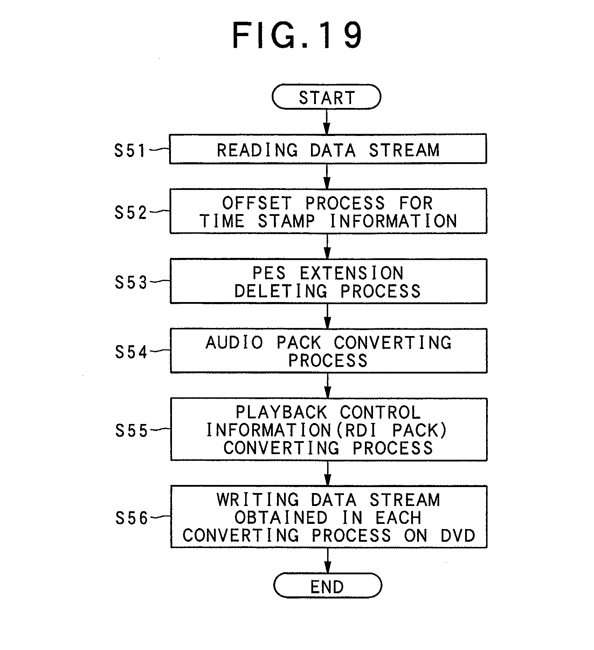

The data stream conversion recording process is described below by referring to FIG. 19.

FIG. 19 is a flowchart showing the operation of the data stream conversion recording process.

The conversion recording process is performed under control of each unit by the control unit 311, and the converted and recorded VOB is assumed to have already been set.

First, when an instruction to format-convert and to record data on the DVD not shown in the attached drawings is issued by the user, etc. through the operation unit not shown in the attached drawings, the interface 307 reads the data stream from the HDD 306 to the format converting unit 400 (step S51).

Then, the format converting unit 400 performs the following process on each pack or each VOB unit 114.

The time stamp information converting process (offset process) is first performed on each pack (step S52), and the PES extension deleting process is performed on each pack (step S53).

Then, the audio pack converting process is performed on each VOB unit 114 (step S54), and the playback control information (RDI pack) converting process is performed (step S55).

Finally, the interface 307 outputs the data stream converted into the video system to the DVD-R/RW drive 305 for each pack, each VOB unit 114, or each VOB. The DVD-R/RW drive 305 writes the data stream in the video system on the DVD not shown in the attached drawings (step S56).

As described above, according to the present embodiment, the format converting unit 400 performs the time information converting process (offset process), the PES extension deleting process, the audio pack converting process, and the playback control information (RDI pack) converting process on the data stream recorded in the video recording system so that the data stream can be converted into the data stream in the video system with the code system of the contents information maintained without arranging each VOB or VOB unit as the contents information, thereby realizing the format conversion at a high speed without deterioration of data.

Since the contents information in the video recording system can be converted into the contents information in the video system, the format in which the contents information can be correctly played back in the video system can be realized.

In the explanation above, the data analysis unit 401 has been described for each converting process and deleting process. However, the data analysis unit 401 can simultaneously analyze the pack in each converting process and deleting process.

Furthermore, according to the present embodiment, the above mentioned format converting unit 400 performs the time stamp information converting process (offset process), the PES extension deleting process, the audio pack converting process, and the playback control information (RDI pack) converting process on each pack, but the format converting unit 400 can be configured by a recording device of a computer, memory, etc. to store a program for performing the above mentioned converting processes or deleting process in the memory and to read the program by the computer to perform each operation.

Additionally, a program for performing the converting processes or deleting process can be stored in a storage medium such as a CD, etc. to read the program from the storage medium when the converting processes or the deleting process are performed and allow the computer to perform the converting processes or deleting process.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A format converting apparatus (307) for converting a format of consecutive contents information (VOB) containing at least one of audio information, video information, and data from a first format for recording (VR system) to a second format for generation (video system) with contents of the contents information (VOB) unchanged, **characterized by**;
a conversion device (400) for converting the first format (VR system) into the second format (video system) with any coding format (data stream) maintained in the contents information (VOB).

2. The format converting apparatus (307) according to claim 1, **characterized in that**
the consecutive contents information (VOB) is configured by one or plural pieces of unit information (VOBU) which is a smallest regeneration unit of the contents information (VOB); and
said conversion device (400) converts a format for each unit information (VOBU).

3. The format converting apparatus (307) according to claim 1 or 2, **characterized in that**:
said conversion device (400) comprises:
an obtaining device (402) for obtaining contents regeneration starting time information (SCR) indicating at least a regeneration starting time of the contents information (VOB); and
a setting device (405) for setting the obtained contents regeneration starting time information (SCR) at a predetermined time set by the second format (video system).

4. The format converting apparatus (307) according to claim 2, **characterized in that**
when regeneration control information (PES extension information) is provided for use in regeneration control of the contents information (VOB) for each unit information (VOBU) in the first format (VR system) while the regeneration control information (PES extension information) is provided for each contents information (VOB) in the second format (video system), said conversion device (400 (406)) converts the regeneration control information (PES extension information) provided in addition to the unit information (VOBU) provided in a position determined in the second format (video system) into invalid data.

5. The format converting apparatus (307) according to claim 2, **characterized in that**:
said conversion device (400) comprises:
a detecting device (403) for detecting a piece (pack) of data forming part of the unit information (VOBU); and
an adding device (407) for adding data piece regeneration starting time information (PTS) to each piece (pack) of the detected data.

6. The format converting apparatus (307) according to claim 5, **characterized in that**
when the data piece regeneration starting time information (PTS) indicating a regeneration starting time at which the piece (pack) of data is regenerated is not added, said adding device (407) adds the data piece regeneration starting time information (PTS) to the piece (pack) of data.

7. The format converting apparatus (307) according to claim 5, **characterized in that**
said adding device (407) configures the piece (pack) of data for each regeneration unit (frame), and adds the data piece regeneration starting time information (PTS) to each piece (pack) of data.

8. The format converting apparatus (307) according to claim 2, **characterized in that**
said conversion device (400 (404, 408, 411)) converts at least regeneration state control information (RDI pack), for control of a regeneration state in each unit information(VOBU), as associated with the second format (video system).

9. An information recording apparatus, **characterized by**:
a format converting apparatus (307) according to any one of claims 1, 2, and 4 to 8; and
a record device (307) for recording the contents information (VOB) in the second format (video system) converted by said format converting apparatus (307) in a storage medium (DVD).

10. A format converting method of converting a format of consecutive contents information (VOB) containing at least one of audio information, video information, and data from a first format for recording (VR system) to a second format for generation (video system) with contents of the contents information (VOB) unchanged, **characterized by**:
a converting process of converting the first format (VR system) into the second format (video system) with any coding format (data stream) maintained in the contents information (VOB).

11. The format converting method according to claim 10, **characterized in that**
the consecutive contents information (VOB) is configured by one or plural pieces of unit information (VOBU) which is a smallest regeneration unit of the contents information (VOB); and
a format is converted for each unit information (VOBU) in said converting process.

12. The format converting method according to claim 10 or 11, **characterized in that**:
said converting process comprises:
an obtaining process of obtaining contents regeneration starting time information (SCR) indicating at least a regeneration starting time of the contents information (VOB); and
a setting process of setting the obtained contents regeneration starting time information (SCR) at a predetermined time set by the second format (video system).

13. The format converting method according to claim 11, **characterized in that**
when regeneration control information (PES extension information) is provided for use in regeneration control of the contents information (VOB) for each unit information (VOBU) in the first format (VR system) while the regeneration control information (PES extension information) is provided for each contents information (VOB) in the second format (video system), the regeneration control information (PES extension information) provided in addition to the unit information (VOBU) provided in a position determined in the second format (video system) is converted into invalid data in said converting process.

14. The format converting method according to claim 11, **characterized in that**:
said converting process comprises:
a detecting process of detecting a piece (pack) of data forming part of the unit information (VOBU); and
an adding process of adding data piece regeneration starting time information (PTS) to each piece (pack) of the detected data.

15. The format converting method according to claim 14, **characterized in that**
when the data piece regeneration starting time information (PTS) indicating a regeneration starting time at which the piece (pack) of data is regenerated is not added, the data piece regeneration starting time information (PTS) is added to the piece (pack) of data in said adding process.

16. The format converting method according to claim 14, **characterized in that**
the piece (pack) of data is configured for each regeneration unit (frame), and the data piece regeneration starting time information (PTS) is added to each piece (pack) of data in said adding process.

17. The format converting method according to claim 11, **characterized in that**
at least regeneration state control information (RDI pack) for control of a regeneration state in each unit information (VOBU) is converted as associated with the second format (video system) in said converting process.

18. An information recording method for converting a format of consecutive contents information (VOB) containing at least one of audio information, video information, and data from a first format for recording (VR system) to a second format for generation (video system) with contents of the contents information (VOB) unchanged, and recording the converted contents information (VOB) in the second format (video system) in a storage medium (DVD), **characterized by**:
a converting process of converting the contents information (VOB) in the first format (VR system) into the second format (video system) in the format converting method according to any of claims 10 to 17; and
a recording process of recording the converted contents information (VOB) in the second format (video system) in a storage medium (DVD).

19. A format converting program to convert a format of consecutive contents information (VOB) containing at least one of audio information, video information, and data from a first format for recording (VR system) to a second format for generation (video system) with contents of the contents information (VOB) unchanged, making a computer function as a converting device (400) for converting the first format (VR system) into the second format (video system) with any coding format (data stream) maintained in the contents information (VOB).

20. The format converting program for converting the format through a computer according to claim 19, **characterized in that**:
the consecutive contents information (VOB) is configured by one or plural pieces of unit information (VOBU) which is a smallest regeneration unit of the contents information (VOB); and
the format converting program makes the computer function as a conversion device (400) for converting a format for each unit information (VOBU).

21. The format converting program for converting the format through a computer according to claim 19 or 20, **characterized in that**
the format converting program makes the computer function as:
an obtaining device (402) for obtaining contents regeneration starting time information (SCR) indicating at least a regeneration starting time of the contents information (VOB); and
a setting device (405) for setting the obtained contents regeneration starting time information (SCR) at a predetermined time set by the second format (video system).

22. The format converting program for converting the format through a computer according to claim 20, **characterized in that**
when regeneration control information (PES extension information) is provided for use in regeneration control of the contents information (VOB) for each unit information (VOBU) in the first format (VR system) while the regeneration control information (PES extension information) is provided for each contents information (VOB) in the second format (video system), the format converting program makes the computer function as a conversion device (400 (406))for converting the regeneration control information (PES extension information) provided in addition to the unit information (VOBU) provided in a position determined in the second format (video system) into invalid data.

23. The format converting program for converting the format through a computer according to claim 20, **characterized in that**
the format converting program makes the computer function as:
a detecting device (403) for detecting a piece (pack) of data forming part of the unit information (VOBU); and
an adding device (407) for adding data piece regeneration starting time information (PTS) to each piece (pack) of the detected data.

24. The format converting program for converting the format through a computer according to claim 23, **characterized in that**
when the data piece regeneration starting time information (PTS) indicating a regeneration starting time at which the piece (pack) of data is regenerated is not added, the format converting program makes the computer function as an adding device (407) for adding the data piece regeneration starting time information (PTS) to the piece (pack) of data.

25. The format converting program for converting the format through a computer according to claim 23, **characterized in that**
the format converting program makes the computer function as an adding device (407) for configuring the piece (pack) of data for each regeneration unit (frame), and adding the data piece regeneration starting time information (PTS) to each piece (pack) of data.

26. The format converting program for converting the format through a computer according to claim 20, **characterized in that**
the format converting program makes the computer function as a conversion device (400 (404, 408, 411)) for converting at least regeneration state control information (RDI pack) for control of a regeneration state in each unit information (VOBU) as associated with the second format (video system).

27. The computer-readable storage medium (DVD) on which the format converting program according to any of claims 19, 20, and 22 to 26 is stored so as to be readable through a computer.

28. An information recording program to convert a format of consecutive contents information (VOB) containing at least one of audio information, video information, and data from a first format for recording (VR system) to a second format for generation (video system) with contents of the contents information (VOB) unchanged, and record the converted contents information (VOB) in the second format (video system) in a storage medium (DVD), **characterized in that**
the format converting program makes the computer function as:
a conversion device (400) for converting the contents information (VOB) in the first format (VR system) into the second format (video system) by the format converting program according to any one of claims 19 to 26; and
a record device (307) for recording the contents information (VOB) converted into the second format (video system).

29. The computer-readable storage medium (DVD) on which the information recording program according to claim 28 is stored so as to be readable through a computer.
